# EUROPEAN PATENT SPECIFICATION

(11) **EP 4 569 366 B1**
(45) Date of publication and mention of the grant of the patent: **25.11.2026**
(21) Application number: 23934385.8
(22) Date of filing: 24.04.2023
(51) Int. Cl.: G02B 15/10, G02B 15/17, G02B 15/163, G02B 17/02, G02B 13/00, G02B 15/08

(54) **VARIABLE OPTICAL SYSTEM AND ELECTRONIC DEVICE**
VARIABLES OPTISCHES SYSTEM UND ELEKTRONISCHE VORRICHTUNG
SYSTÈME OPTIQUE VARIABLE ET DISPOSITIF ÉLECTRONIQUE

(43) Date of publication of application: 18.06.2025
(73) Proprietor: Huawei Technologies Co., Ltd., Shenzhen, Guangdong 518129 (CN)
(72) Inventor: MATSUI, Takumi, Kanagawa 221-0056 (JP); NIHEI, Yasuhide, Kanagawa 221-0056 (JP)
(74) Representative: Grünecker Patent- und Rechtsanwälte PartG mbB
(86) International application number: PCT/CN2023/090347
(87) International publication number: WO 2024/221180

(56) References cited:
- WO-A1-2019/156933
- WO-A1-2022/104749
- CN-A- 1 213 085
- CN-A- 103 424 849
- CN-A- 106 443 989
- CN-A- 111 538 145
- CN-A- 111 880 289
- US-A- 4 596 447
- US-A1- 2006 193 059
- US-A1- 2009 219 626
- US-A1- 2012 113 529
- US-A1- 2014 146 397
- US-A1- 2015 234 161

## Description

### Technical Field

The present disclosure relates an optical system including a plurality of lenses and lens groups, and an electronic device having thereof.

### Background Art

In recent years, electronic devices such as mobile terminal devices have become remarkably popular, and moreover, it has become common for these electronic devices to incorporate compact camera units. There is a strong demand for such camera units to be compact, especially in a direction of a thickness of an electronic device. Furthermore, in recent years, in order to adapt to the shooting of various subjects, camera units increasingly have multiple camera modules, with a wide-angle lens for normal shooting, an ultra-wide-angle lens with a larger angle than that of the wide-angle lens, and a telephoto lens with a longer focal length than that of the wide-angle lens.

Increasing the number of camera modules allows for a wider focal length range, but this causes a larger size and higher costs of the electronics devices. Therefore, it is desirable that the optical system used in one camera module has a plurality of optical functions in one optical system, and specifically, it is a variable focal length range optical system that can change the focal length range.

Also, in order to achieve high image quality, it is desirable that the F number of the optical system is small. Specifically, it is desirable that the F number is 3.0 or less, preferably 2.0 or less.

Also, for such an optical system, it is desirable that a minimum object distance is small in order to be able to shoot close to the object. Furthermore, it is desirable that an absolute value of optical magnification is large in order to enable magnification of an object optically at a short distance.

US 4596447 A1 discloses a conversion type varifocal lens system comprising: a master lens consisting of a front positive lens assembly and a rear negative lens assembly, said master lens for performing the photography and; a supplementary negative lens component arranged to be inserted into and retracted from a space between said front and rear assemblies, whereby when said supplementary component advances into the space between said front and rear assemblies, said front assembly is moved forward.

Patent literature 1 discloses a bending optical system comprising a reflective element for bending an optical axis by approximately 90 degrees in order to reduce the size of electronic devices in a thickness direction. In the bending optical system, the reflective element such as a prism or mirror is placed near the incident side of the optical system to bend the optical axis by approximately 90 degrees to reduce the size the electronic devices in the thickness direction, especially in a telephoto lens which tend to have a longer overall optical length.

Patent literatures 2 and 3 disclose a zoom lens having a reflecting optical system (bending type zoom lens). The zoom lens having the reflecting optical system provides multiple focal length ranges in a single camera module while achieving a compact thickness of the electronic device.

However, the bending type zoom lens disclosed in Patent literatures 2 and 3 are configured such that two or more lens groups move along the optical axis in order to change the focal length. Therefore, in such a bending type zoom lens, the total length of the optical system becomes too long. In addition, in such a bending type zoom lens, since the movement of two or more lens groups causes large changes in aberration, it has been difficult to reduce the F-number while maintaining a compact size.

Further, in such a bending type zoom lens, it is difficult to keep the F-number below 2.0 or 3.0 while maintaining a compact size. Furthermore, it is difficult to shorten the minimum object distance or increase the absolute value of optical magnification.

For the above reasons, the conventional bending type zoom lens could not solve the problem to be solved by the present invention. In other words, the conventional bending type zoom lens could not provide a compact, high-performance optical system having multiple functions, especially a variable focal length range optical system.

In this way, the optical system according to the present invention intends to provide a variable focal length range optical system that achieves a small F-number and a short minimum object distance while miniaturizing camera units in the thickness direction, which was difficult with conventional technology.

### Citation List

### Patent Literature

Patent literature 1: US 2020/0233178 A1
Patent literature 2: US 7,995,284 B2
Patent literature 3: US 2019/0324236 A1

### Summary

According to one aspect of the present disclosure, an optical system has a positive refractive power as a whole, comprising:
a first lens group having the positive refractive power and including at least four aspherical surfaces, the first lens group is movable along a direction of an optical axis direction in a moving range;
a second lens group including at least four aspherical surfaces; the second lens group is movable and is configured to be located on the optical axis or out of the optical path; and
a third lens group,
wherein the variable optical system switches between a fist state and a second state, and wherein

in the first state, the first lens group moves from a position close to an image side to a position close to an object side to focus from infinity to a near object, the second lens group is out of an optical path and does not act on an image formation, and the third lens group is located on the optical axis and close to the first lens group;
in the second state, the second lens group is located on the optical axis and inserted into a part of a space occurred by the first lens group moving to the object side in the first state, and acts on image formation as a part of the variable optical system; and
wherein the third lens group is movable, and in the second state, the third lens group is out of the optical path. When switching between the first state and the second state, the second lens group, or the second lens group and the third lens group are moved in the direction perpendicular to the optical axis by inserting or removing, thereby minimizing the increase in size in the direction of the total length in changing the optical characteristics, and miniaturization in the direction of thickness of the electronic device becomes possible.

In order to achieve the miniaturization and high performance that the present invention seeks to realize, it is necessary to effectively correct aberrations with a small number of lenses. Therefore, the first lens group includes at least four aspherical surfaces to effectively correct axial aberration including spherical aberration and off-axis aberration such as coma aberration and field curvature.

The optical system switches between a state in which the second lens group is inserted into the optical path and a state in which the second lens group is removed from the optical path. That is, the optical system switches between the first optical state and the second optical state as the second lens group moves. As the state is switched, the optical system can change optical properties such as focal length. The second lens group includes at least four aspherical surfaces in order to effectively correct the occurrence and change of aberrations caused by the insertion of the second lens group into the optical path while reducing the number of constituent lenses of the second lens group.

A lens having an aspherical surface is made of a material such as glass or plastic, and has an aspherical shape formed on one or both surfaces of the lens. The use of a glass aspherical lens increases the degree of freedom in selecting the refractive index, Abbe number, and anomalous partial dispersion of the lens, and is particularly effective in correcting lateral chromatic aberration. By using a glass aspherical lens in the first lens group, which has the main imaging function, it becomes possible to effectively correct the lateral chromatic aberration that occurs in the first lens group, and the optical system becomes to achieve high performance. Furthermore, it becomes possible to reduce the change in performance due to the insertion of the second lens group. Also, by using plastic aspherical lenses, it is possible to reduce the weight and cost of each lens group.

According to one aspect of the present disclosure, the optical system is a so-called bending optical system having a reflective element that bends the optical axis by approximately 90 degrees in the optical path from the object to the image. The reflective element is composed of a prism, a mirror, or the like, and by bending an optical axis that forms an image from an object by approximately 90 degrees, it is possible to reduce the size of the imaging device in the thickness direction even with a so-called telephoto lens having a relatively long focal length. Further, by rotating the reflective element in a predetermined manner by means of a driving mechanism, it is possible to correct image blur caused by camera shake or the like.

According to one aspect of the present disclosure, in the optical system, when switching between the first optical state and the second optical state, the second lens group moves perpendicular to the optical axis and parallel to the longitudinal direction of an imaging element. The effective area of the imaging element used in the present invention is a rectangle having an aspect ratio such as a ratio of long sides to short sides of 4:3 or 3:2, the imaging element is arranged so that its short side direction coincides with the thickness direction of the imaging device. Therefore, when the second lens group is removed from the optical path, it moves in parallel with the longitudinal direction that does not affect the thickness direction of the imaging device, so that the size of the imaging device can be reduced in the thickness direction.

According to the above configuration, the optical system of the present invention can be an optical system with variable optical characteristics such as a focal length while realizing a short overall length and a compact size in the thickness direction of the imaging device.

According to one aspect of the present disclosure, in the optical system, the first lens group moves to different positions on the optical axis as the first state and the second state are switched. By moving the first lens group to a different position on the optical axis, it becomes easier to obtain a space for inserting the second lens group into the optical path, and the size of the optical system can be reduced particularly in the overall length direction. In addition, even when the focal position shifts or aberration changes due to the insertion or removal of the second lens group, correction is facilitated.

According to one aspect of the present disclosure, in the optical system, when focusing from infinite to a short distance object, focusing can be performed by moving the first lens group along the optical axis toward infinite. With such a configuration, focusing can be performed by the first lens group in both the first state and the second state, the drive device can be shared and simplified, and it also contributes to miniaturization of the optical system.

According to one aspect of the present disclosure, in the optical system, in the first state, the first lens group moves from the image side to the object side to perform focusing from infinity to a short distance object, and when switching to the second state, the second lens group is inserted into a part of the space on the optical path occurred by the movement of the first lens group toward the object side in the first state. With such a configuration, it is possible to obtain a space in which the second lens group can be inserted into the optical path, and to effectively utilize the space in the optical axis direction of the optical system, thereby reducing the total length.

By switching the lens group acting on the imaging of the optical system in the first state and the second state, it is possible to more effectively change the optical characteristics such as the focal length. In particular, the lens configuration of the second and third lens groups and the position on the optical axis where they are inserted can be optimized for each state, and high optical performance can be obtained even in a case where optical characteristics such as focal length are greatly changed.

According to one aspect of the present disclosure, in the optical system, at least one of the lenses constituting the first lens group is non-circular with different effective length in the long-side direction and the short-side direction. If the optical system is a bending optical system that bends the optical axis by approximately 90 degrees, the long side direction and the short side direction of the lens coincide with the long side direction and the short side direction of the imaging element, and the short side direction of the imaging element corresponds to the thickness direction of the imaging device as described above. In other words, it is effective to reduce the size of the lens in the short side direction in order to make the imaging device thinner, and it is possible to reduce the size of the imaging device in the thickness direction by using the non-circular lens with a shorter length in the short side direction. In particular, when trying to make the F number smaller than 3 or less or 2 or less, the length of the lenses constituting the first lens group becomes a constraint on miniaturization in the thickness direction of the optical system. By using a non-circular lens in the first lens group, it is possible to achieve both a small F-number and a compact size in the thickness direction.

According to one aspect of the present disclosure, the optical system has a second lens group and a third lens group in order from the first lens group toward the image side. By having the third lens group on the image side, it is possible to effectively correct off-axis aberrations such as lateral chromatic aberration, field curvature, and distortion. If the optical system is a bending optical system that bends the optical axis by approximately 90 degrees, it is desirable that the lenses constituting the third lens group are non-circular in order to reduce the size of the imaging device in the thickness direction. In addition, it is desirable that the lenses constituting the third lens group consist of about two to three lenses in order to achieve both miniaturization in the overall length direction of the optical system and optical performance.

According to one aspect of the present disclosure, the optical system has a second reflective element that bends the optical axis by approximately 90 degrees on the image side of the optical system. If the optical system is a bending optical system that bends the optical axis by approximately 90 degrees, it is possible to avoid an increase in size in the thickness direction of the imaging device even when moving the imaging element parallel to the image plane for camera shake correction by bending the optical axis by approximately 90 degrees again by the second reflective element.

According to one aspect of the present disclosure, in the optical system, the first lens group consists of at least three lenses and has at least four aspherical surfaces. By having at least four aspherical surfaces, the number of lenses and the lens configuration can be simplified, and aberration correction can be performed significantly. Also, in order to achieve both miniaturization in the overall length direction of the optical system and optical performance, it is desirable that the number of lenses constituting the first lens group is three to four at most.

According to one aspect of the present disclosure, the optical system satisfies the following conditional expressions (1) to (3). $0.55 < \left|FL1/EFL1\right| < 0.9$ (1) $0.6 < EFL 1 / TTL < 1.0$ (2) $0.2 < \left|MAG\right| < 1.0$ (3)

Here, FL1 indicates the focal length of the first lens group, EFL1 indicates the focal length of the optical system in the first state, and TTL indicates a distance on an optical axis from a surface vertex of a first lens to an image plane when focusing on infinite of the optical system in the first state, and MAG indicates an optical magnification at a minimum object distance of the optical system.

Conditional expression (1) is for appropriately setting the focal length range of the first lens group. If the value falls below the range of the conditional expression (1), the refractive power of the first lens group becomes too strong, and aberrations such as spherical aberration and field curvature occur greatly, resulting in making it difficult to correct them sufficiently. On the other hand, if the value exceeds the range of conditional expression (1), the refractive power becomes too weak, resulting in an increase in the total length of the optical system.

Conditional expression (2) is for appropriately defining the range of the ratio of the overall focal length to the total length of the optical system in the first state. If the value falls below the range of conditional expression (2), the total length becomes too short relative to the focal length, resulting in making it difficult to correct aberrations. On the other hand, if the value exceeds the range of conditional expression (2), the total length becomes too long with respect to the focal length, resulting in making it unsuitable for miniaturization of the optical system.

Conditional expression (3) is for defining the range of optical magnification at the minimum object distance. The optical magnification is defined by the optical lateral magnification of the optical system in the minimum object distance state. If the value falls below the range of conditional expression (3), the optical magnification to be provided by the present invention is not satisfied. In addition, the amount of movement of the focus lens group is reduced, resulting in making it difficult to obtain a space for inserting and removing the second lens group. On the other hand, if the value exceeds the range of conditional expression (3), the absolute value of optical magnification becomes too high, resulting in making it difficult to correct aberrations, and the amount of movement of the focus lens group becomes too large, resulting in making it difficult to reduce the total length Moreover, conditional expression (3) may be more preferably replaced with the following conditional expression (3'). If conditional expression (3') is satisfied, the effects described above can be obtained more effectively. $0.3 < \left|MAG\right| < 0.7$ (3')

According to one aspect of the present disclosure, the optical system satisfies the following conditional expressions (4) to (5). $0.7 < \left|FL2/EFL1\right| < 2.3$ (4) $0.4 < \left|FL3/EFL2\right| < 2.8$ (5)

Here, FL2 indicates the focal length of the second lens group, FL3 indicates the focal length of the third lens group, and EFL2 indicates the focal length of the optical system in the second state.

Conditional expression (4) is for defining the ratio of the focal length of the second lens group in the first state to the focal length in the first state. If the value falls below the range of conditional expression (4), the refracting power becomes too strong, resulting in making it difficult to correct aberrations. On the other hand, if the value exceeds the range of conditional expression (4), a sufficient effect cannot be obtained with respect to changes in optical characteristics during insertion.

Conditional expression (5) is for defining the ratio of the focal length of the third lens group in the second state to the focal length in the second state. If the value falls below the range of conditional expression (5), the refracting power becomes too strong, resulting in making it difficult to correct aberrations. On the other hand, if the value exceeds the range of conditional expression (5), a sufficient effect cannot be obtained with respect to changes in optical characteristics during insertion.

According to one aspect of the present disclosure, the optical system satisfies the following conditional expression (6). $0.9 < St / MgTTL < 2.0$ (6)

Here, St indicates a maximum amount of movement of the first lens group when focusing, and MgTTL indicates a total lens length of the second lens group.

Conditional expression (6) is for appropriately defining the ratio of the maximum moving amount of the first lens group during focusing to the total lens length of the second lens group. If the value falls below the lower limit of conditional expression (6), a sufficient space for inserting the second lens group cannot be obtained, or the total length of the optical system becomes large. On the other hand, if the value exceeds the upper limit of conditional expression (6), the amount of movement becomes too long, resulting in making a total length of the optical system longer, or the total lens length of the second lens group becomes too short, resulting in insufficient performance.

It should be understood that the content described in this summary is not intended to limit the main or important features of the embodiments of the present disclosure or to limit the scope of the present disclosure. Other features of embodiments of the present disclosure will be readily understood using the following description.

### Brief Description of Drawings

With reference to the accompanying drawings and the following detailed description, the other features of the above, advantages, and aspects of the embodiments of the present disclosure will become more apparent. In the accompanying drawings, the same or similar reference numbers refer to the same or similar elements.

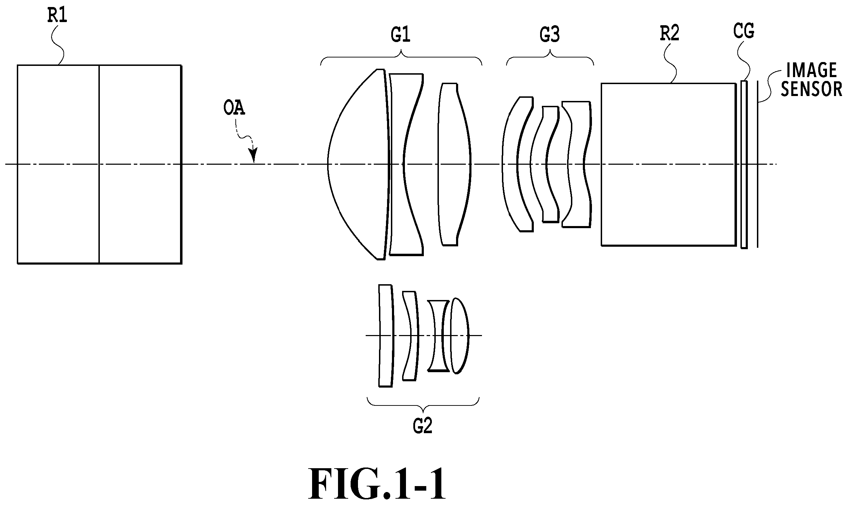

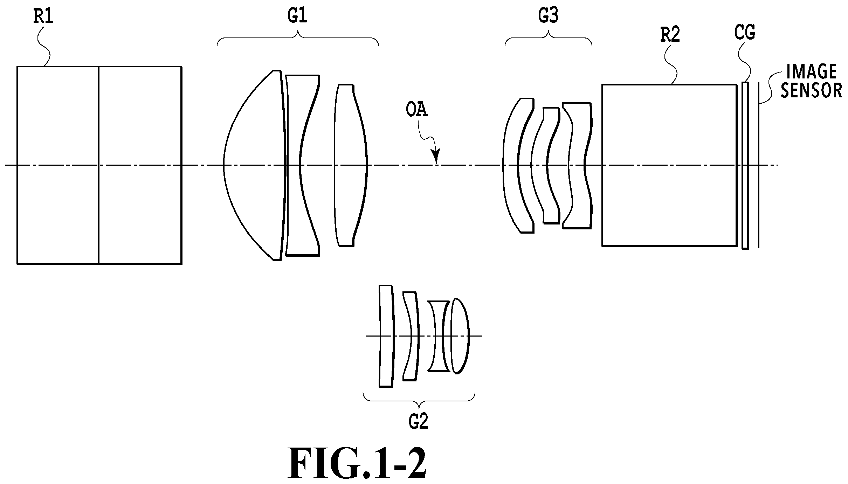

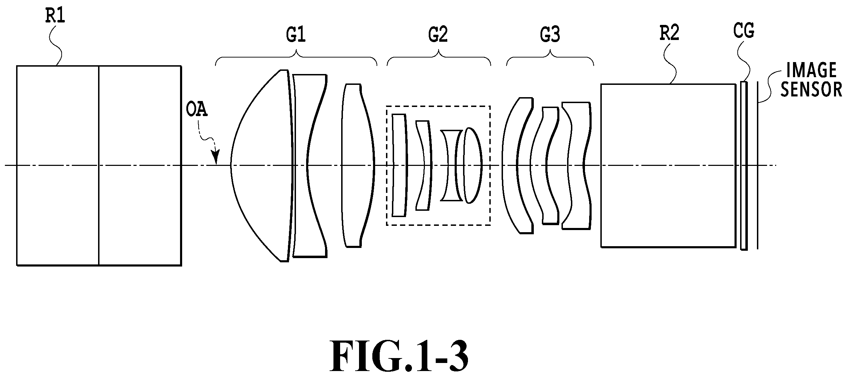

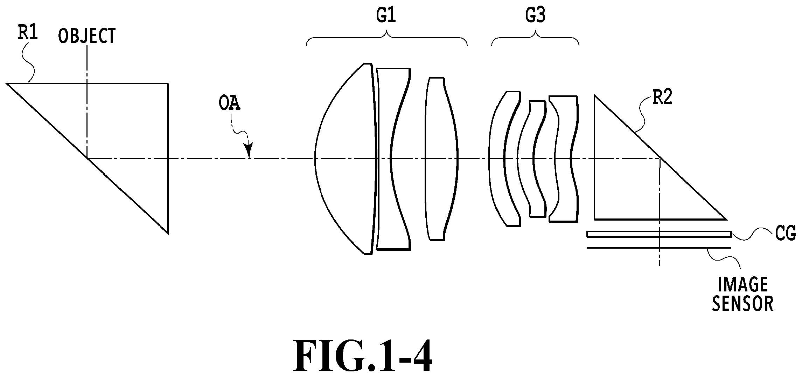

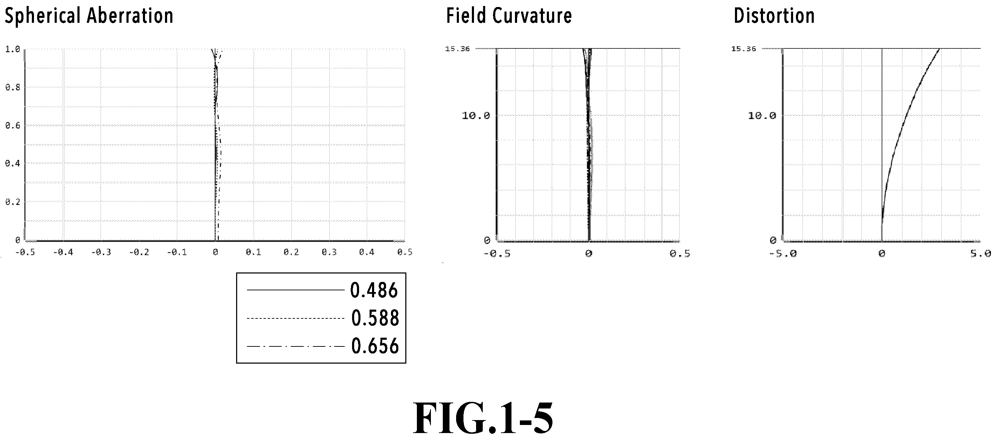

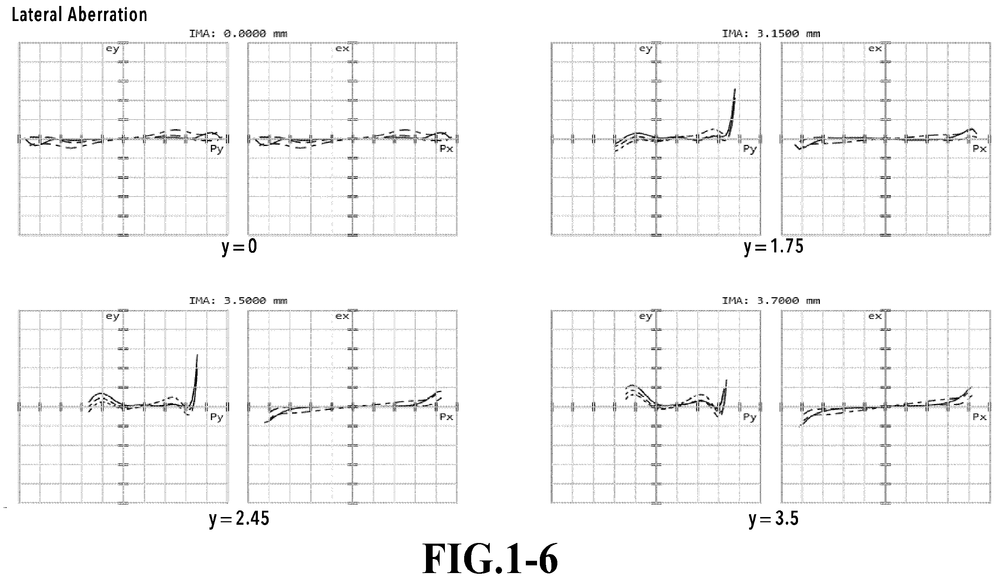

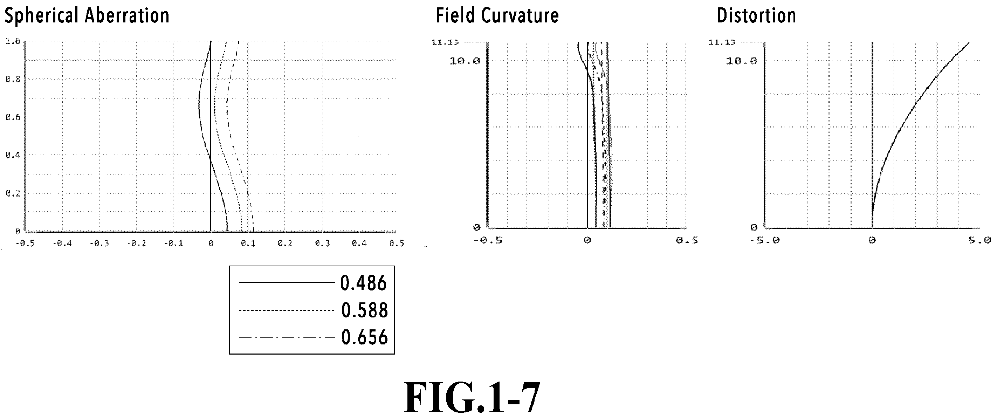

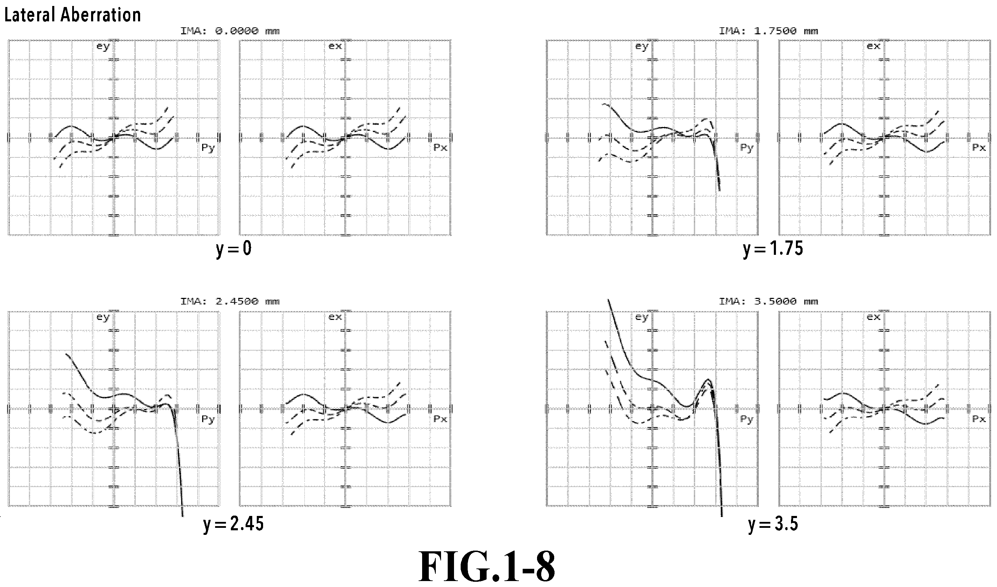

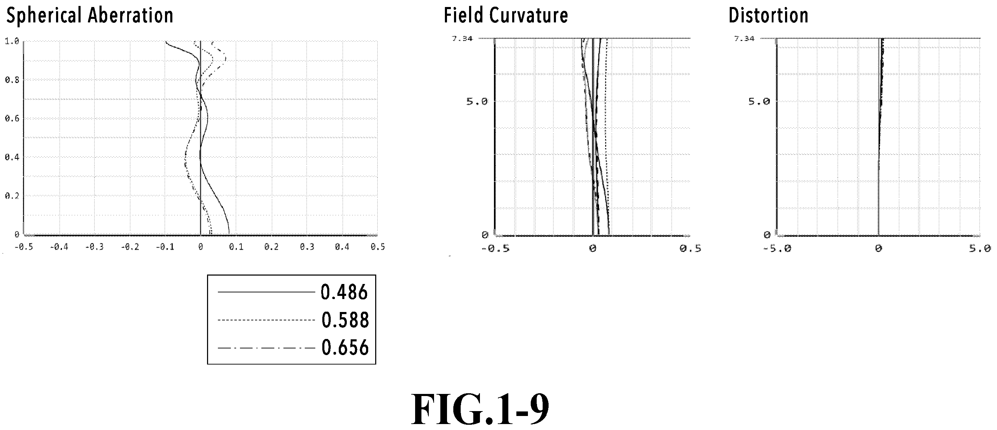

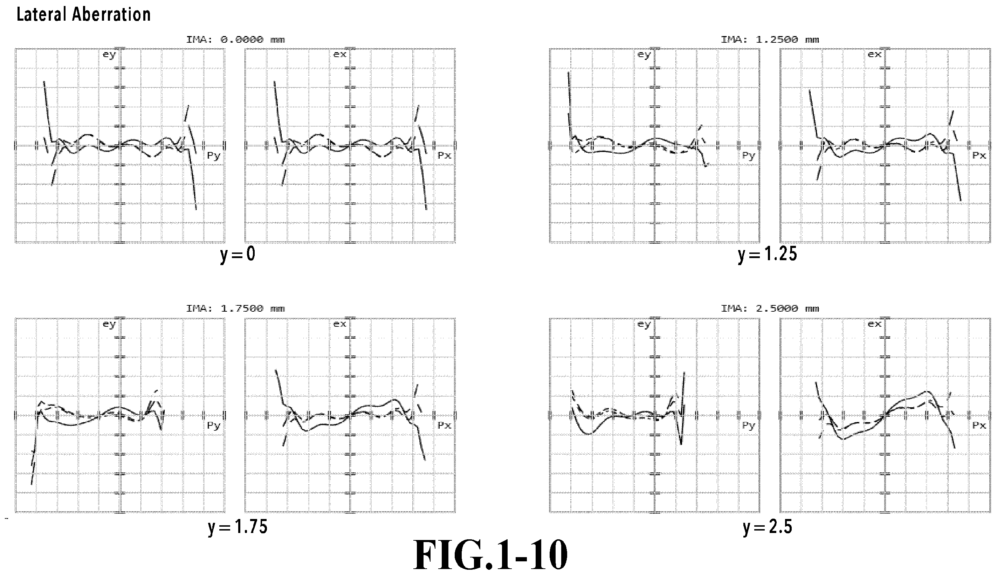

FIG. 1-1 shows a schematic cross-sectional view of an optical system when shooting at the infinity position in the first state, according to a first example of the present disclosure.
FIG. 1-2 shows a schematic cross-sectional view of the optical system when shooting at the minimum object distance in the first state, according to the first example of the present disclosure.
FIG. 1-3 shows a schematic cross-sectional view of the optical system when shooting at the infinity position in the second state, according to the first example of the present disclosure.
FIG. 1-4 shows a schematic cross-sectional view of the optical system showing the bending direction of the optical axis by the reflective elements according to the first example of the present disclosure.
FIG. 1-5 shows spherical aberration, field curvature, and distortion according to the optical system of FIG. 1-1.
FIG. 1-6 shows a lateral aberration diagram according to the optical system of FIG. 1-1.
FIG. 1-7 shows spherical aberration, filed curvature, and distortion according to the optical system of FIG. 1-2.
FIG. 1-8 shows a lateral aberration diagram according to the optical system of FIG. 1-2.
FIG. 1-9 shows spherical aberration, filed curvature, and distortion according to the optical system of FIG. 1-3.
FIG. 1-10 shows a lateral aberration diagram according to the optical system of FIG. 1-3.
FIG. 2-1 shows a schematic cross-sectional view of an optical system when shooting at the infinity position in the first state, according to a second example of the present disclosure.
FIG. 2-2 shows a schematic cross-sectional view of the optical system when shooting at the minimum object distance in the first state, according to the second example of the present disclosure.

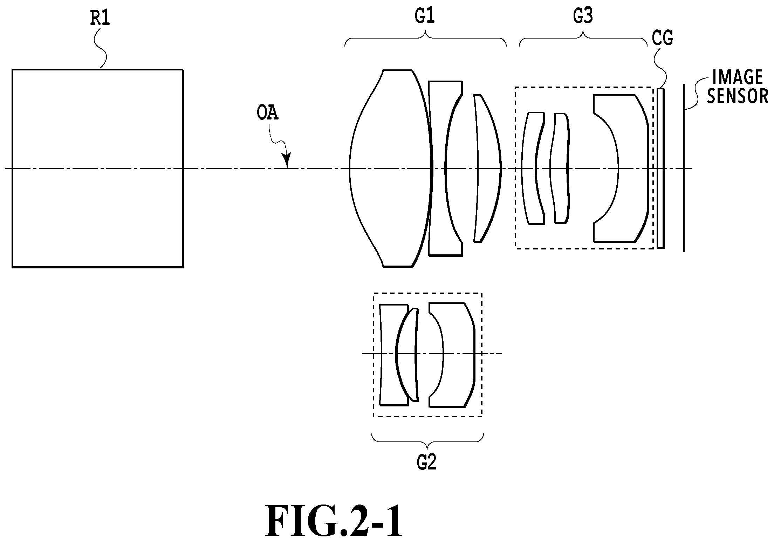

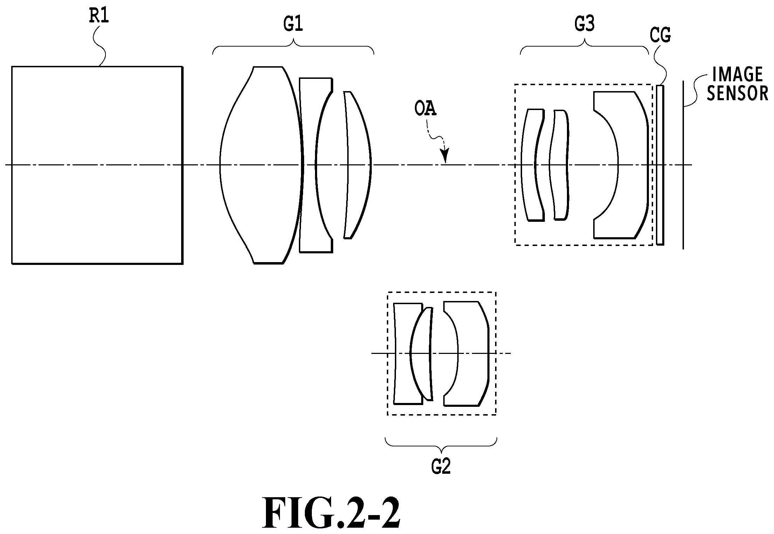

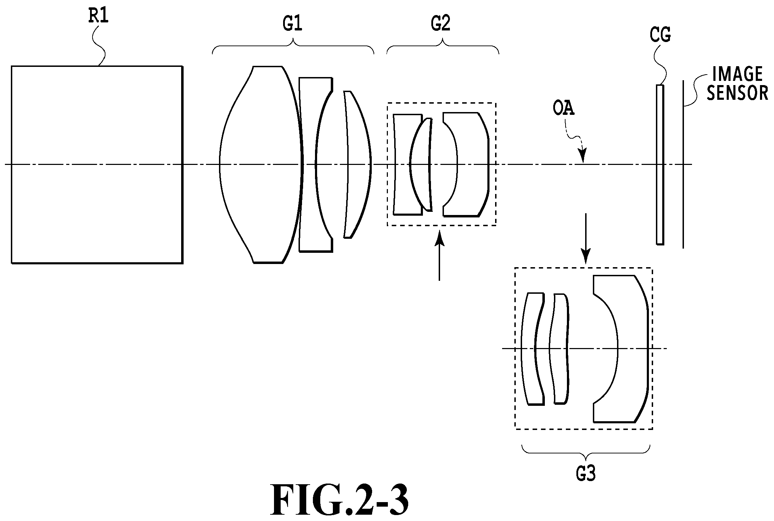

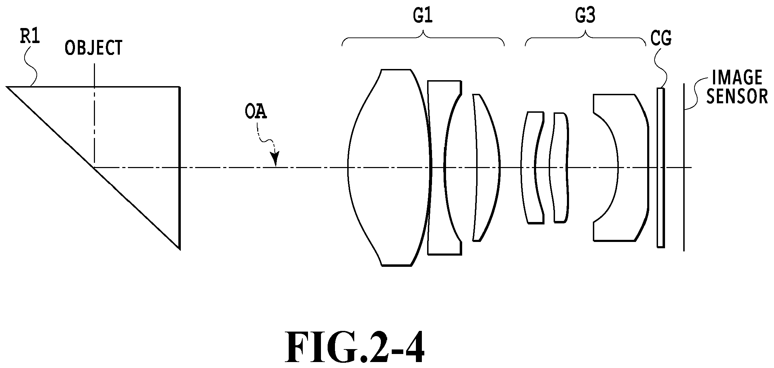

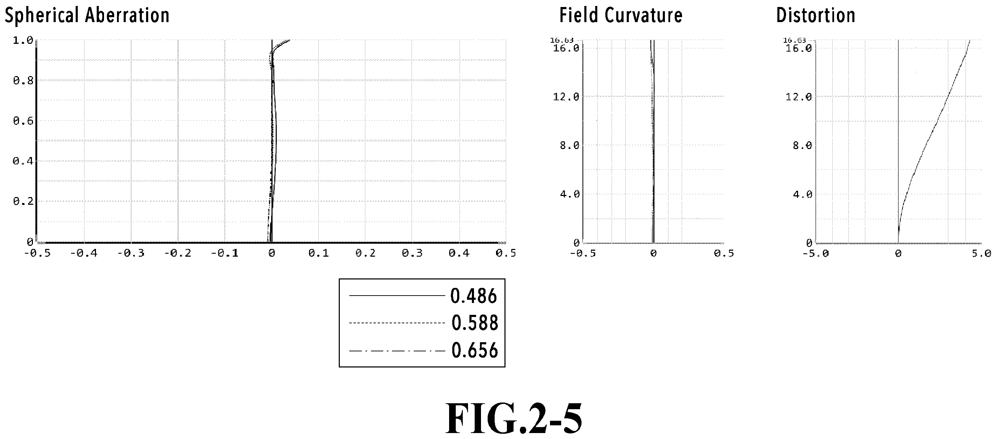

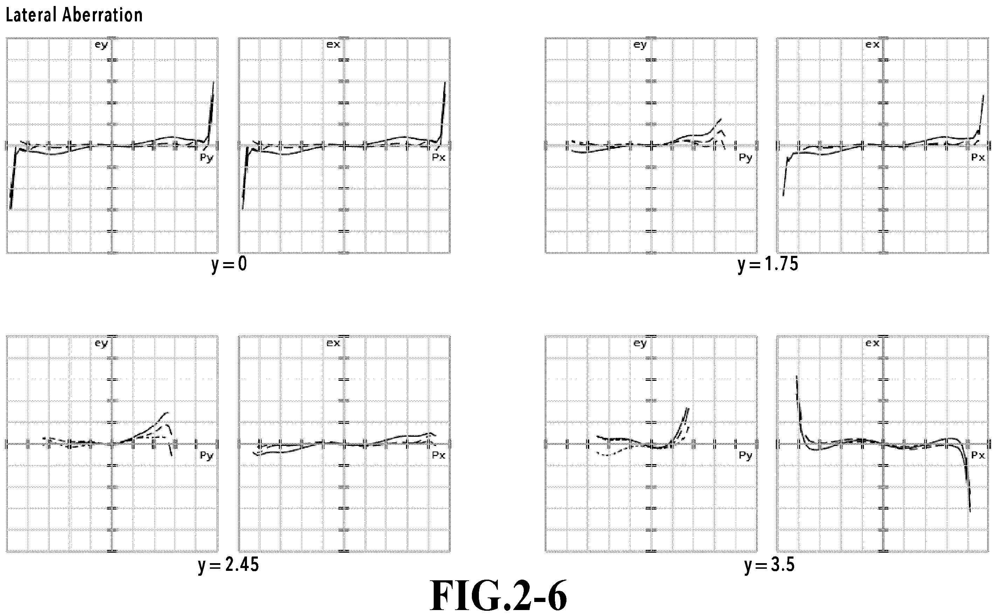

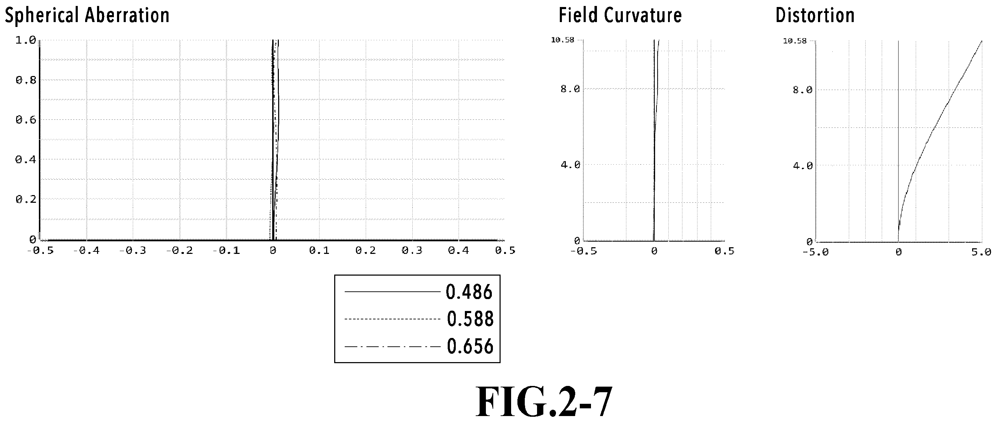

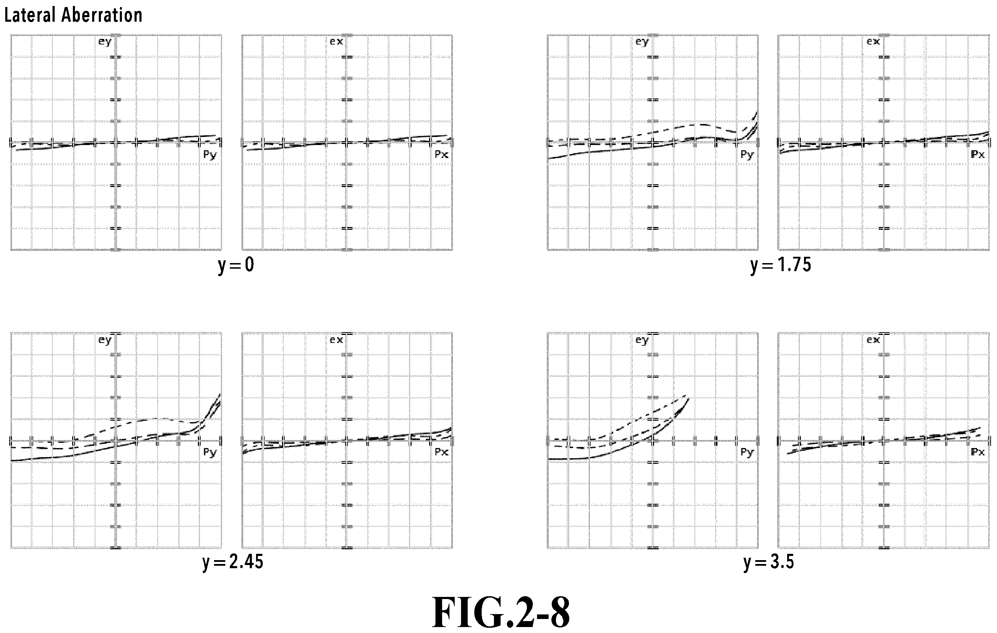

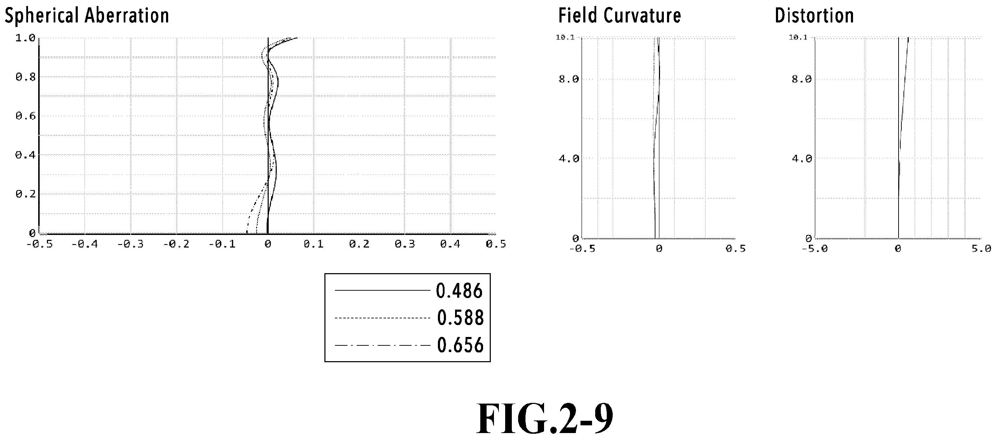

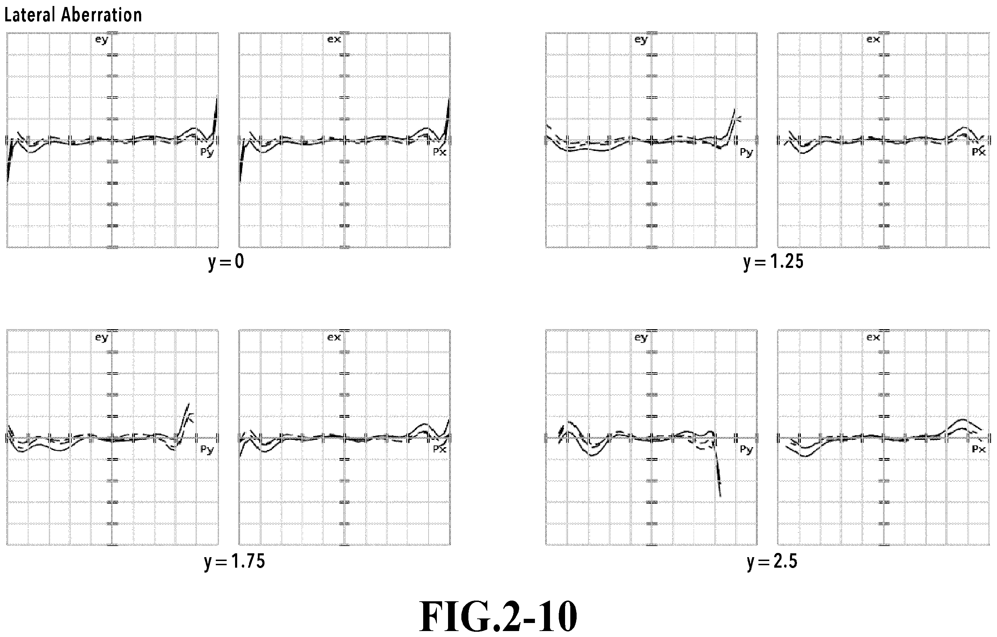

FIG. 2-3 shows a schematic cross-sectional view of the optical system when shooting at the infinity position in the second state, according to the second example of the present disclosure.
FIG. 2-4 shows a schematic cross-sectional view of the optical system showing the bending direction of the optical axis by the reflective element according to the second example of the present disclosure.
FIG. 2-5 shows spherical aberration, field curvature, and distortion according to the optical system of FIG. 2-1.
FIG. 2-6 shows a lateral aberration diagram according to the optical system of FIG. 2-1.
FIG. 2-7 shows spherical aberration, filed curvature, and distortion according to the optical system of FIG. 2-2.
FIG. 2-8 shows a lateral aberration diagram according to the optical system of FIG. 2-2.
FIG. 2-9 shows spherical aberration, filed curvature, and distortion according to the optical system of FIG. 2-3.
FIG. 2-10 shows a lateral aberration diagram according to the optical system of FIG. 2-3.

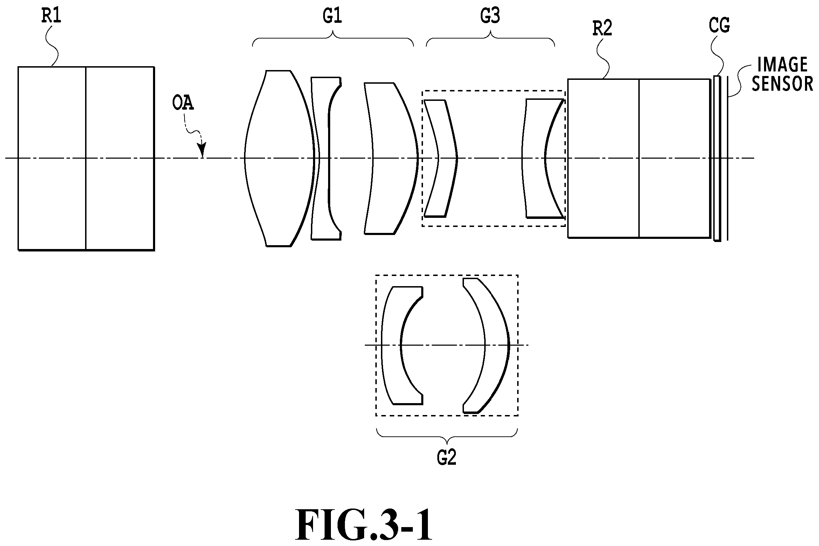

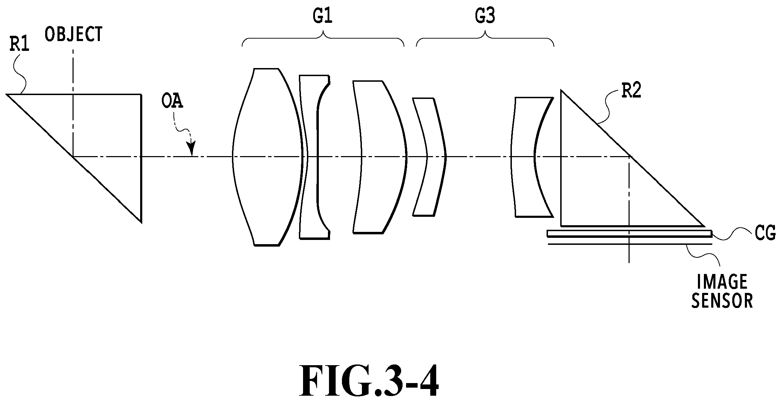

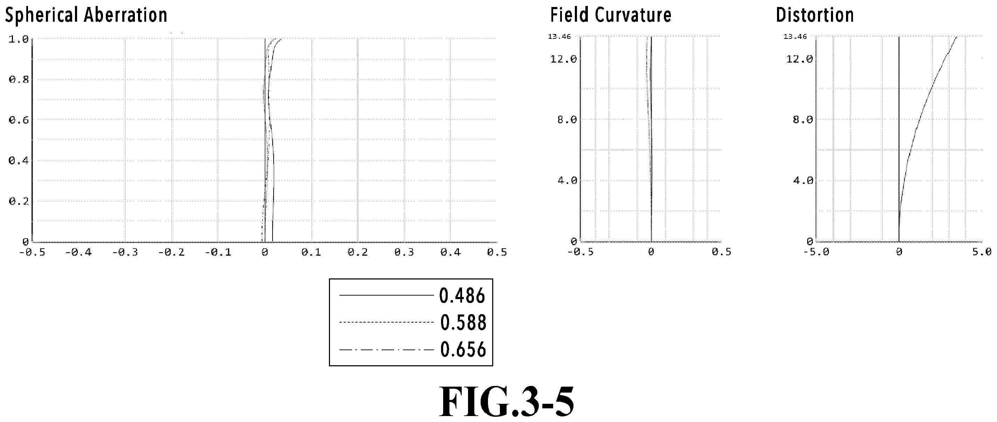

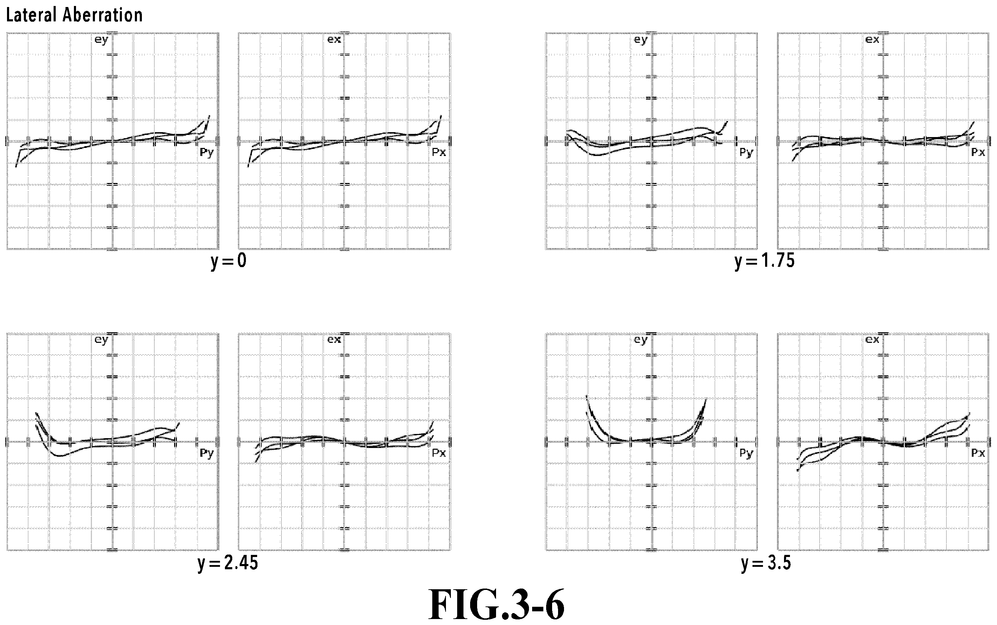

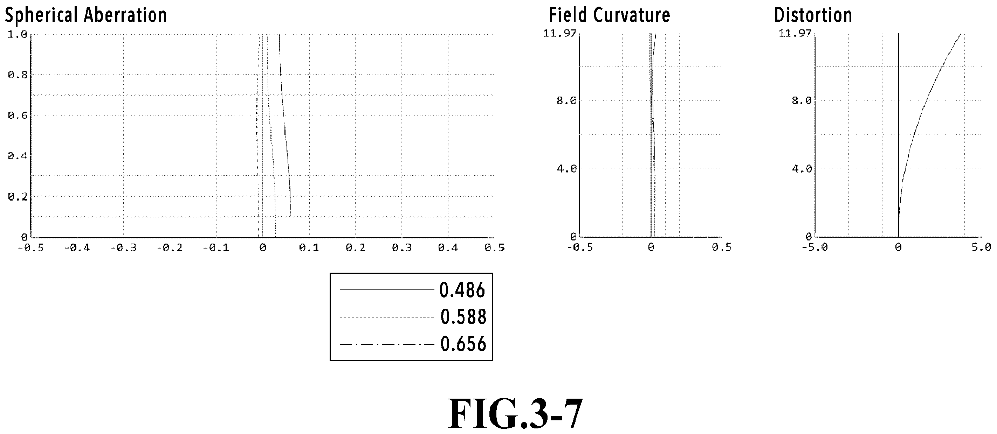

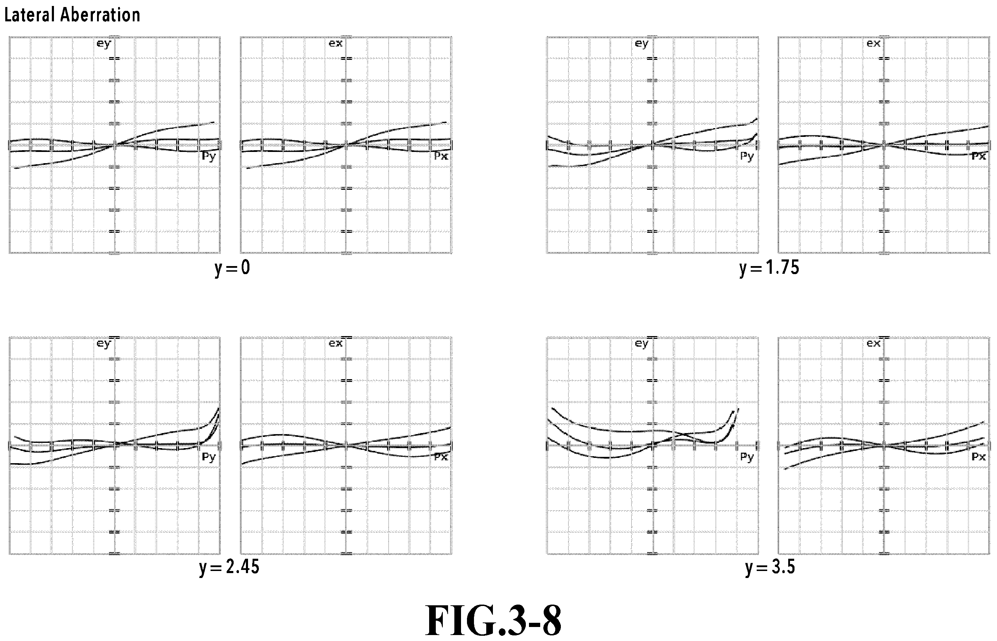

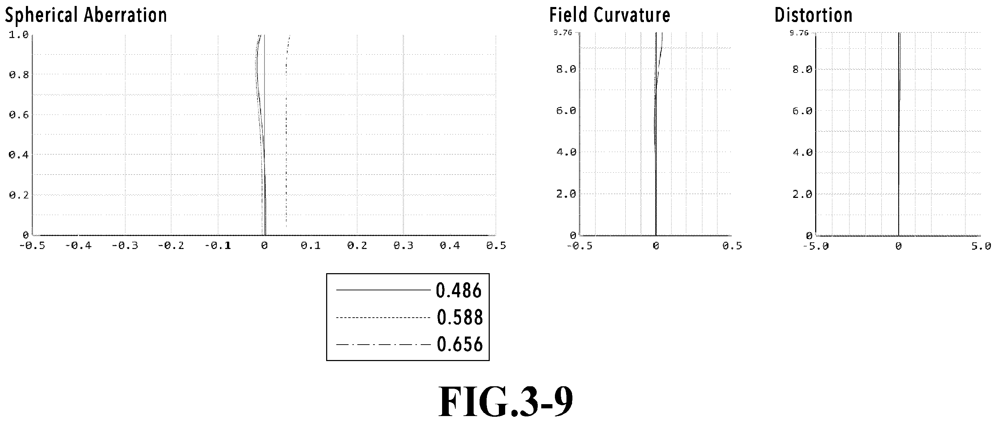

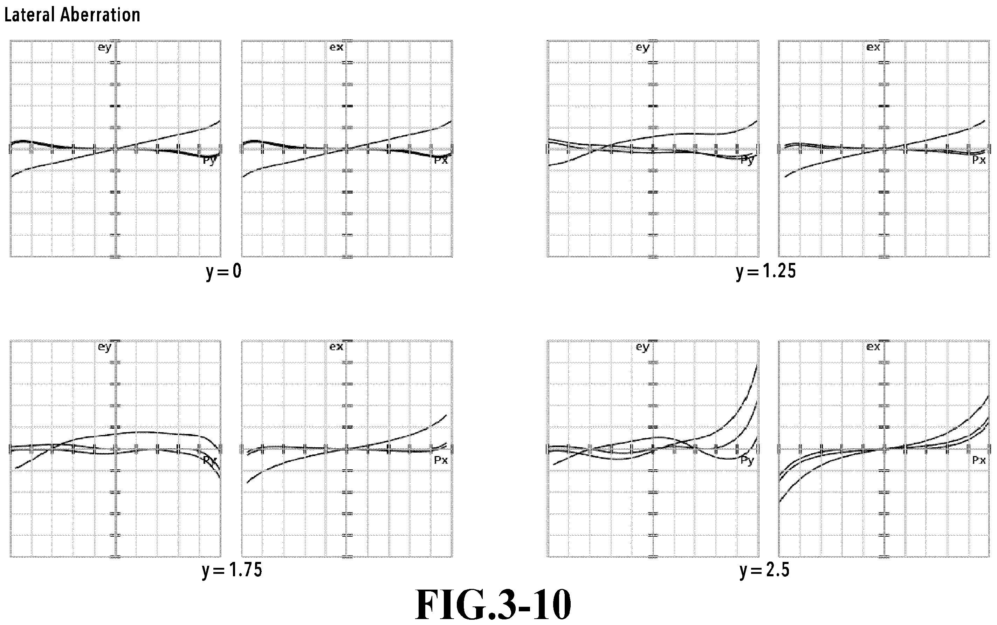

FIG. 3-1 shows a schematic cross-sectional view of an optical system when shooting at the infinity position in the first state, according to a third example of the present disclosure.

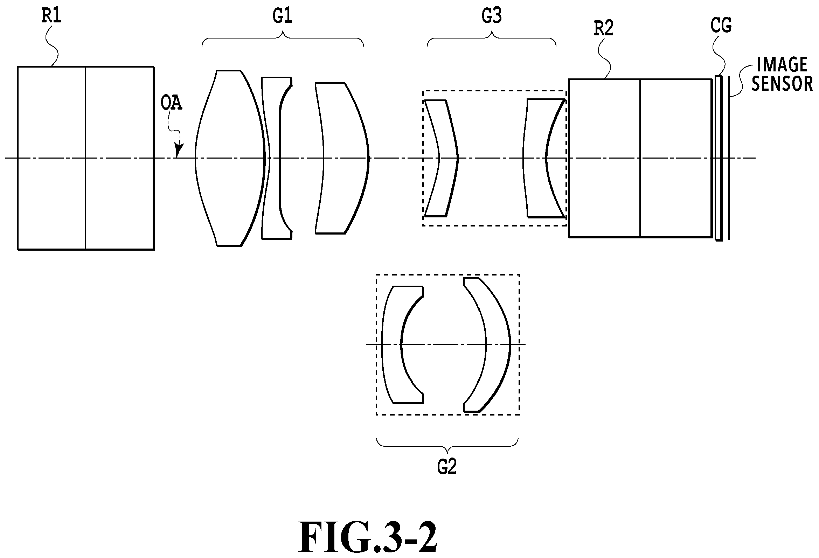

FIG. 3-2 shows a schematic cross-sectional view of the optical system when shooting at the minimum object distance in the first state, according to the third example of the present disclosure.

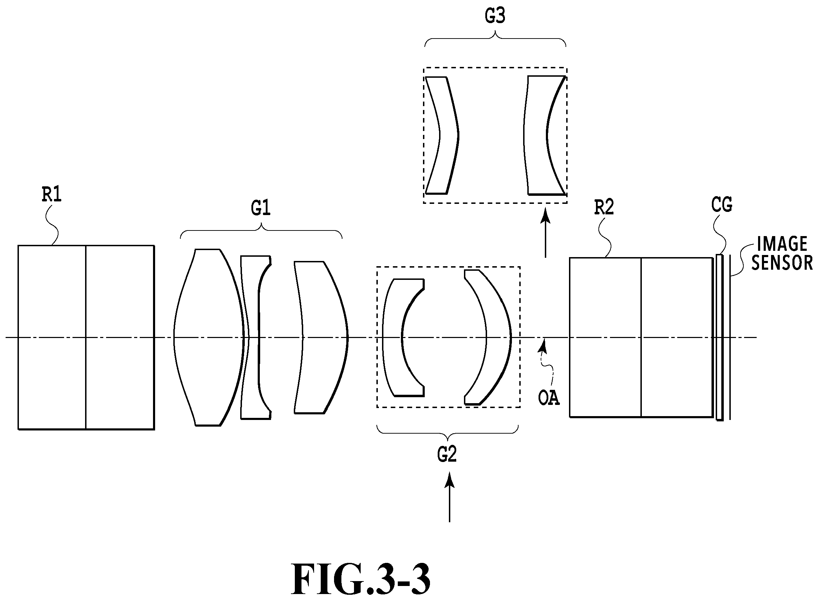

FIG. 3-3 shows a schematic cross-sectional view of the optical system when shooting at the infinity position in the second state, according to the third example of the present disclosure.
FIG. 3-4 shows a schematic cross-sectional view of the optical system showing the bending direction of the optical axis by the reflective elements according to the third example of the present disclosure.
FIG. 3-5 shows spherical aberration, field curvature, and distortion according to the optical system of FIG. 3-1.
FIG. 3-6 shows a lateral aberration diagram according to the optical system of FIG. 3-1.
FIG. 3-7 shows spherical aberration, filed curvature, and distortion according to the optical system of FIG. 3-2.
FIG. 3-8 shows a lateral aberration diagram according to the optical system of FIG. 3-2.
FIG. 3-9 shows spherical aberration, filed curvature, and distortion according to the optical system of FIG. 3-3.
FIG. 3-10 shows a lateral aberration diagram according to the optical system of FIG. 3-3.

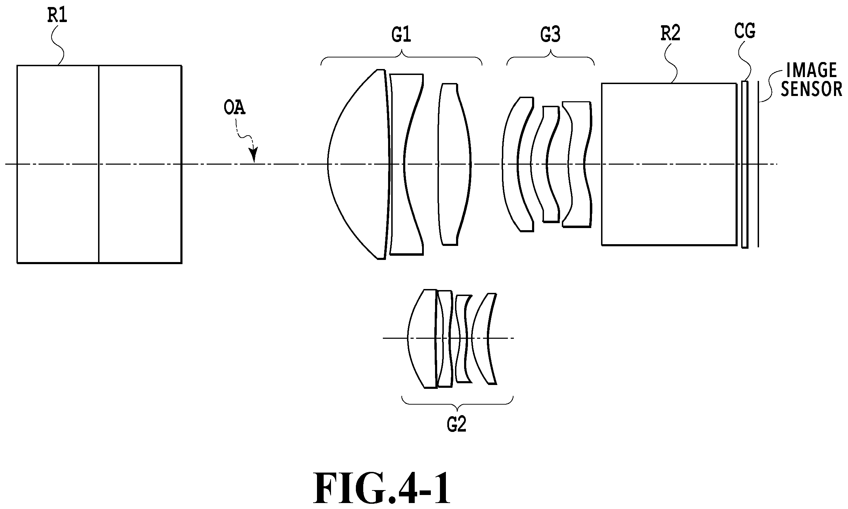

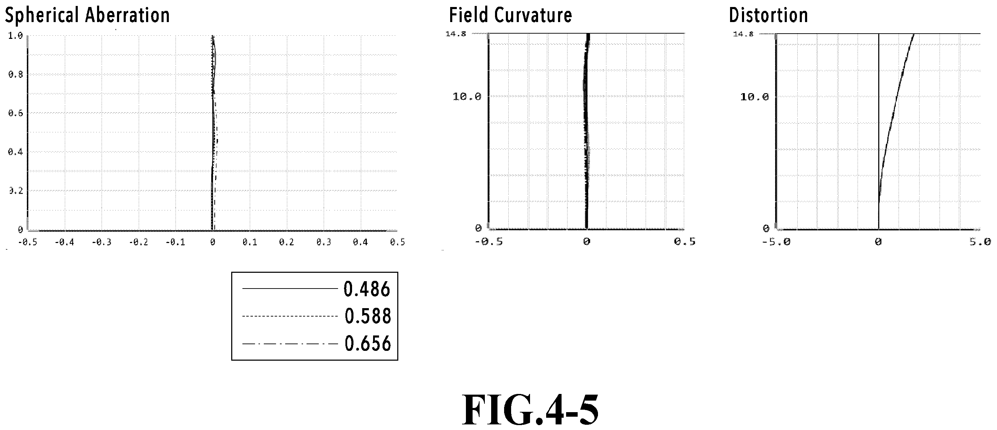

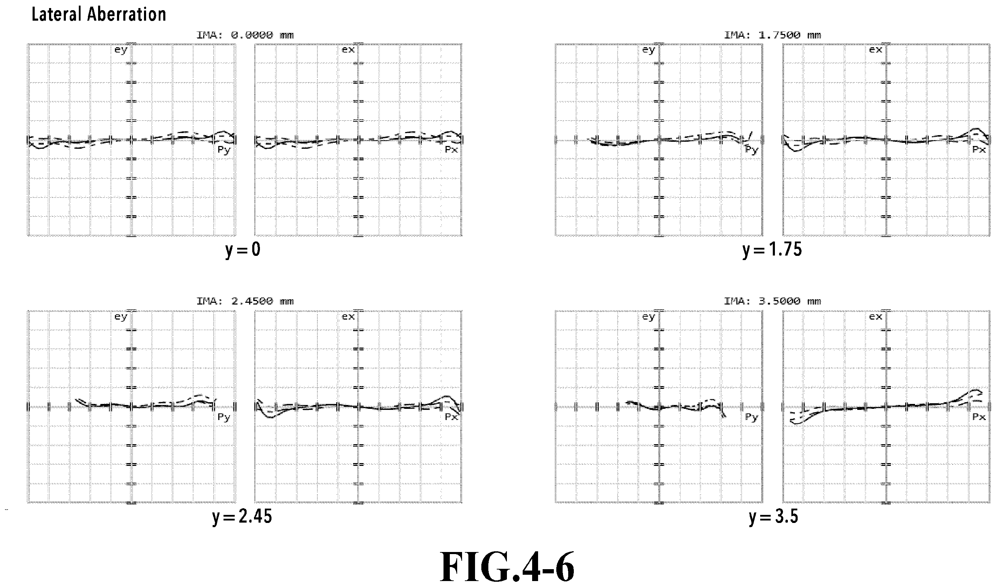

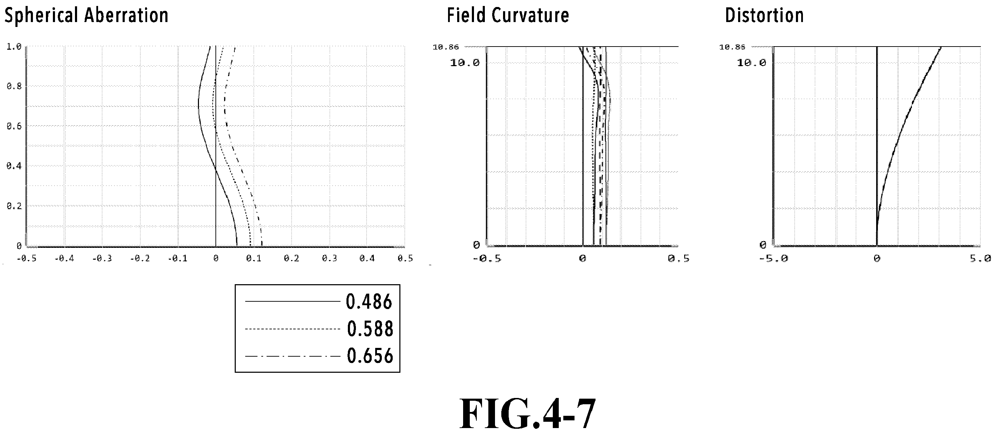

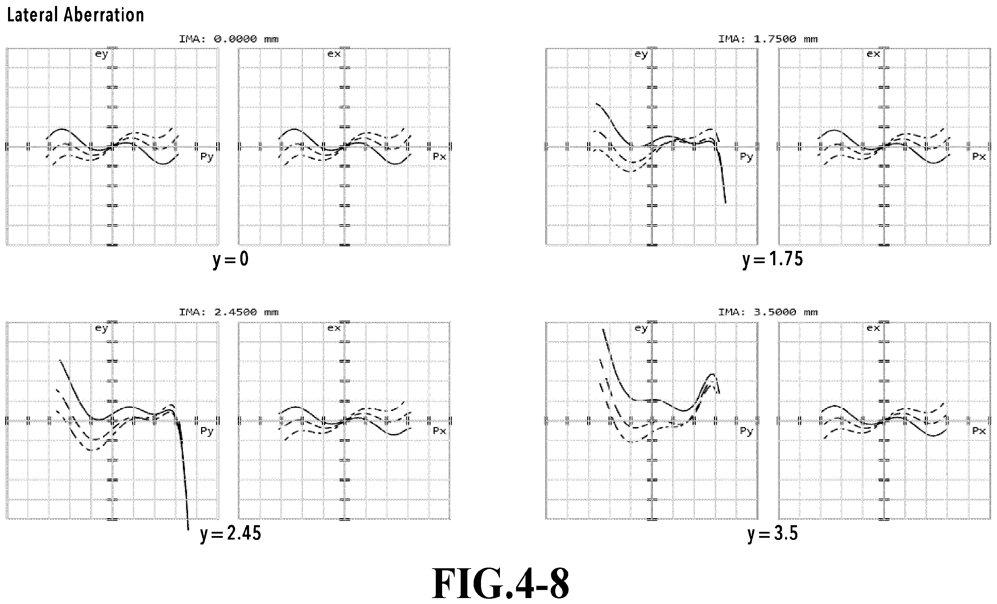

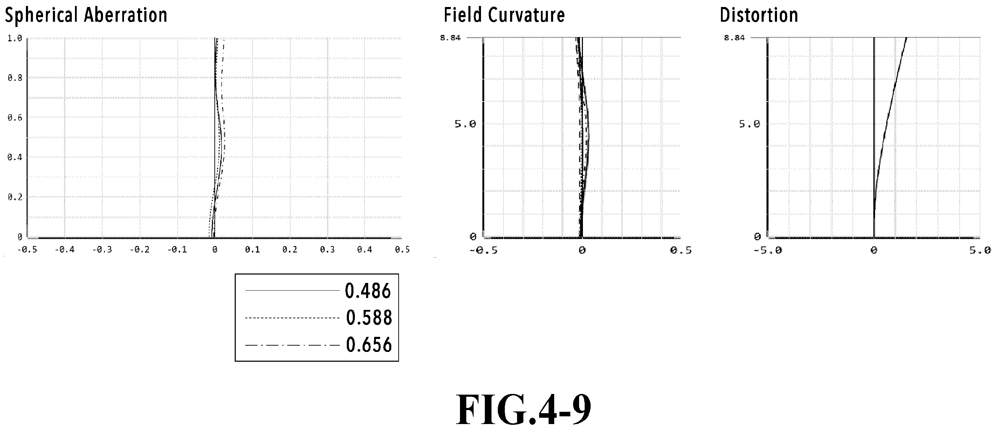

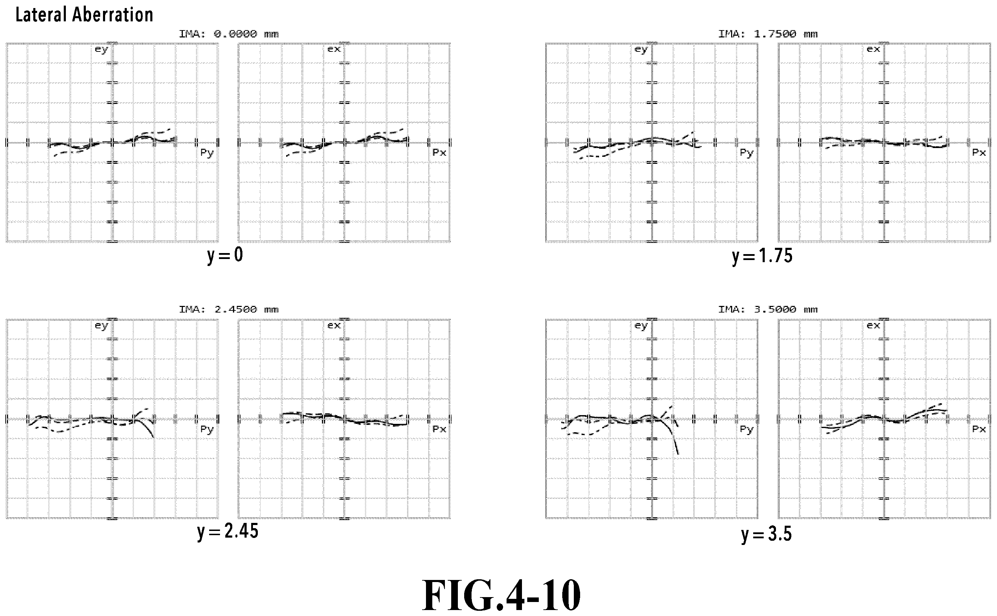

FIG. 4-1 shows a schematic cross-sectional view of an optical system when shooting at the infinity position in the first state, according to a fourth example of the present disclosure.

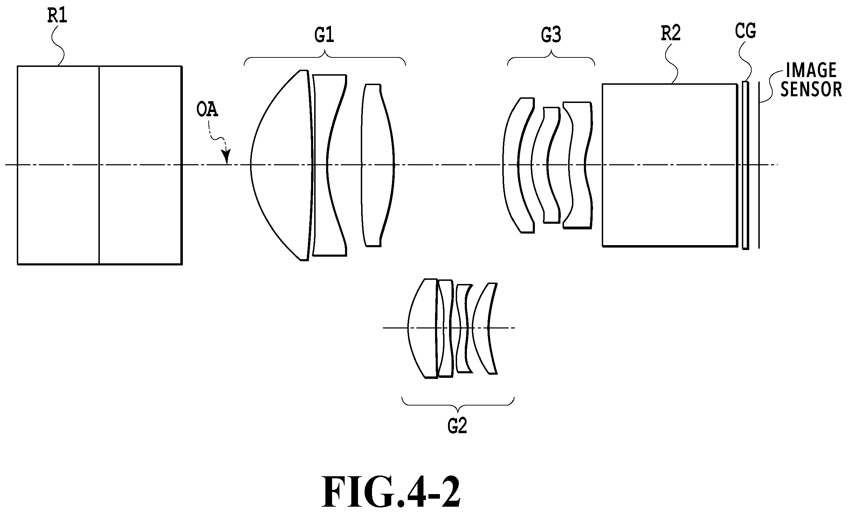

FIG. 4-2 shows a schematic cross-sectional view of the optical system when shooting at the minimum object distance in the first state, according to the fourth example of the present disclosure.

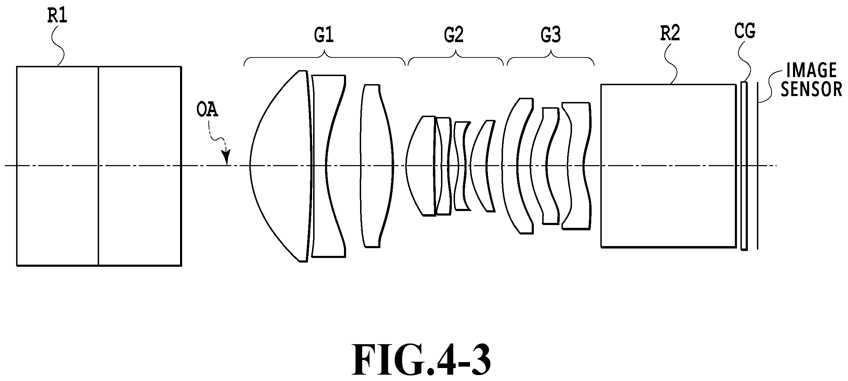

FIG. 4-3 shows a schematic cross-sectional view of the optical system when shooting at the infinity position in the second state, according to the fourth example of the present disclosure.

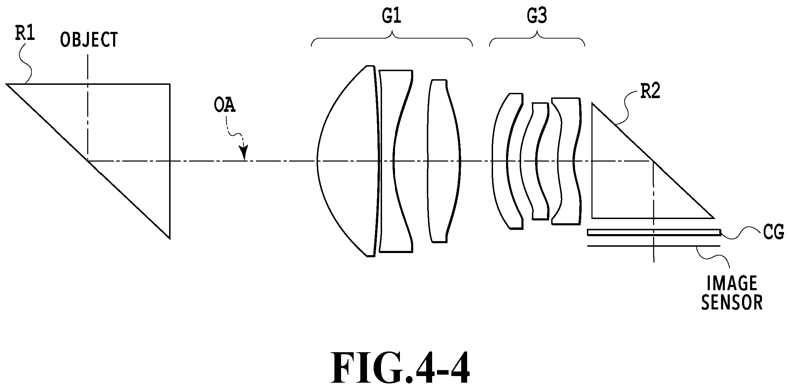

FIG. 4-4 shows a schematic cross-sectional view of the optical system showing the bending direction of the optical axis by the reflective elements according to the fourth example of the present disclosure.
FIG. 4-5 shows spherical aberration, field curvature, and distortion according to the optical system of FIG. 4-1.
FIG. 4-6 shows a lateral aberration diagram according to the optical system of FIG. 4-1.
FIG. 4-7 shows spherical aberration, filed curvature, and distortion according to the optical system of FIG. 4-2.
FIG. 4-8 shows a lateral aberration diagram according to the optical system of FIG. 4-2.
FIG. 4-9 shows spherical aberration, filed curvature, and distortion according to the optical system of FIG. 4-3.
FIG. 4-10 shows a lateral aberration diagram according to the optical system of FIG. 4-3.

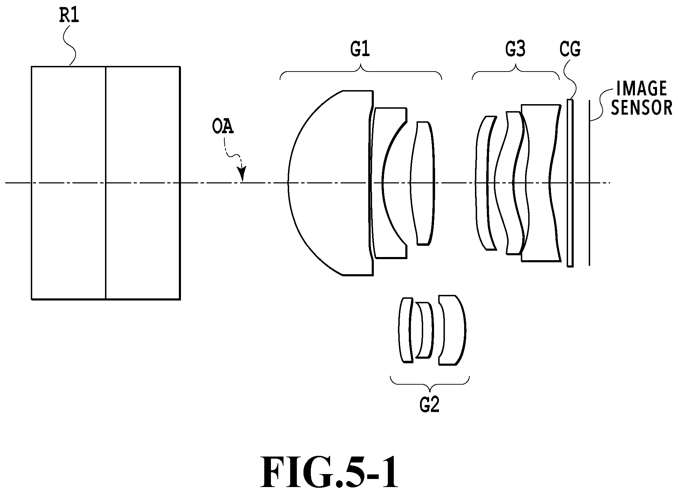

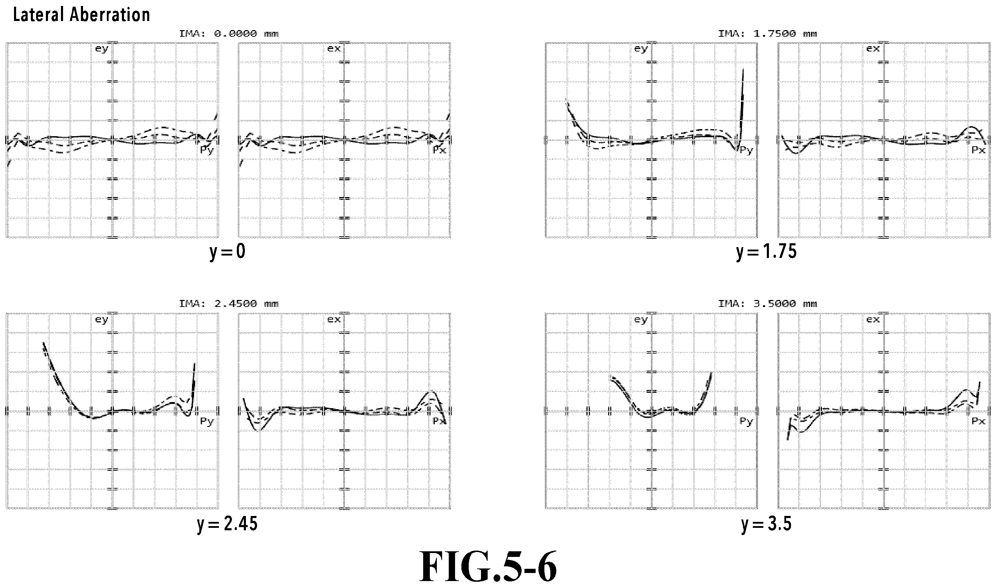

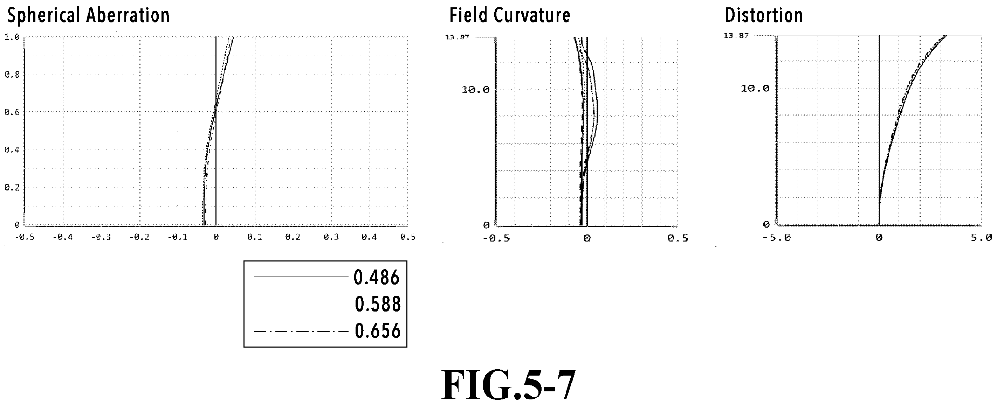

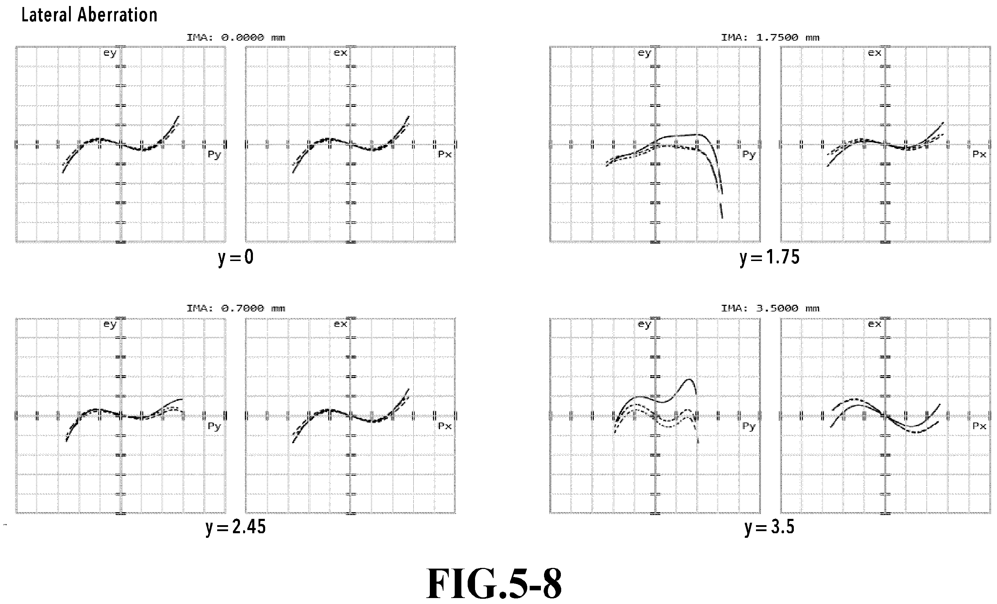

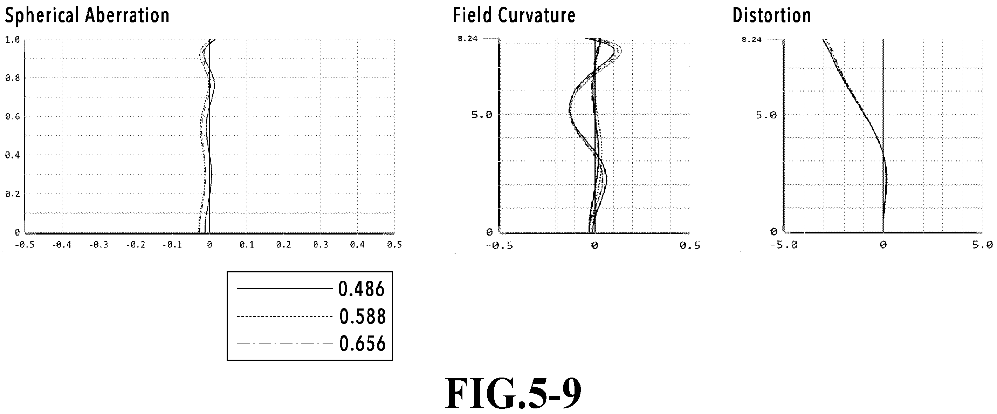

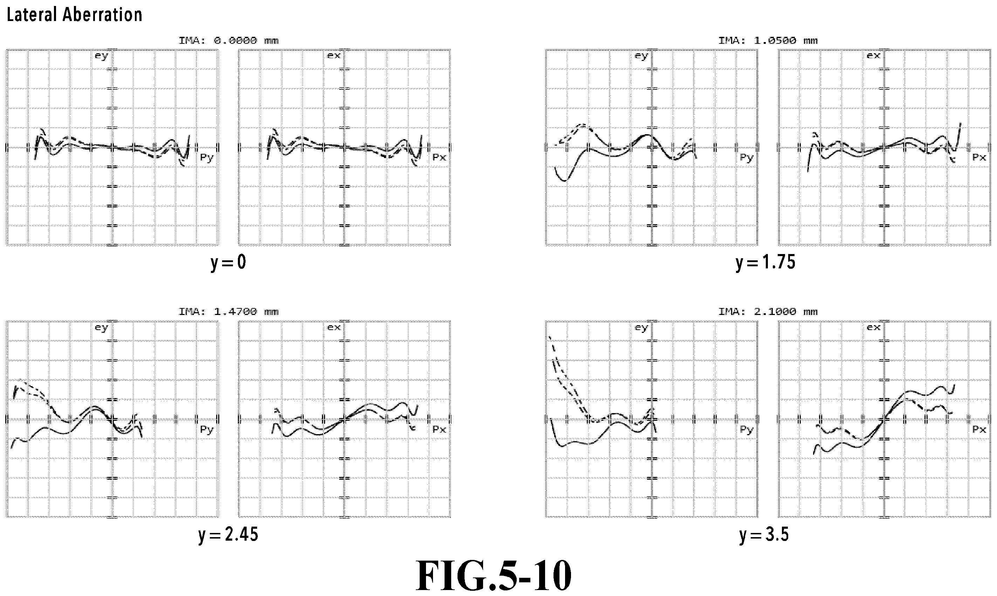

FIG. 5-1 shows a schematic cross-sectional view of an optical system when shooting at the infinity position in the first state, according to a fifth example of the present disclosure.

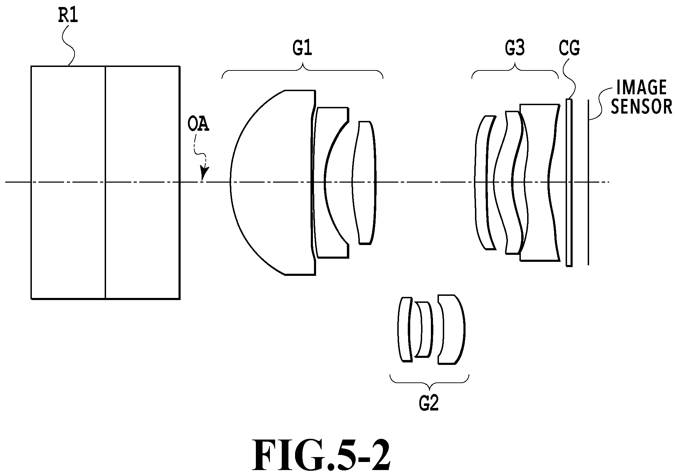

FIG. 5-2 shows a schematic cross-sectional view of the optical system when shooting at the minimum object distance in the first state, according to the fifth example of the present disclosure.

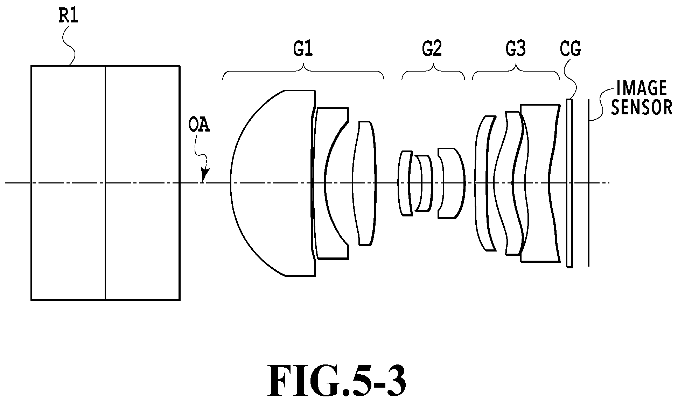

FIG. 5-3 shows a schematic cross-sectional view of the optical system when shooting at the infinity position in the second state, according to the fifth example of the present disclosure.

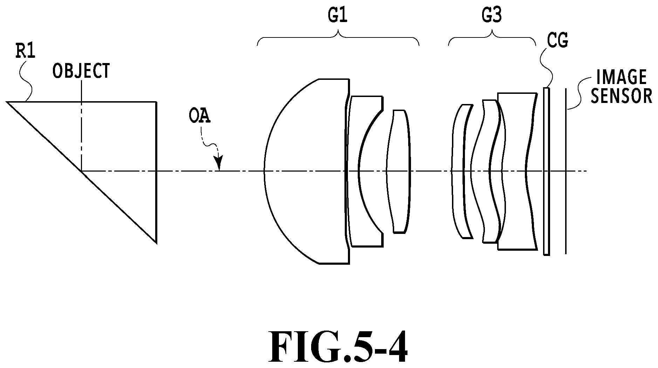

FIG. 5-4 shows a schematic cross-sectional view of the optical system showing the bending direction of the optical axis by the reflective element according to the fifth example of the present disclosure.

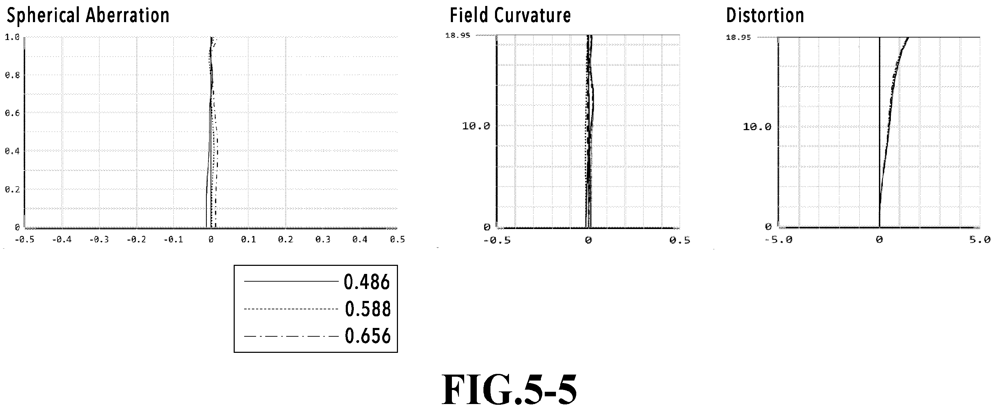

FIG. 5-5 shows spherical aberration, field curvature, and distortion according to the optical system of FIG. 5-1.
FIG. 5-6 shows a lateral aberration diagram according to the optical system of FIG. 5-1.
FIG. 5-7 shows spherical aberration, filed curvature, and distortion according to the optical system of FIG. 5-2.
FIG. 5-8 shows a lateral aberration diagram according to the optical system of FIG. 5-2.
FIG. 5-9 shows spherical aberration, filed curvature, and distortion according to the optical system of FIG. 5-3.
FIG. 5-10 shows a lateral aberration diagram according to the optical system of FIG. 5-3.

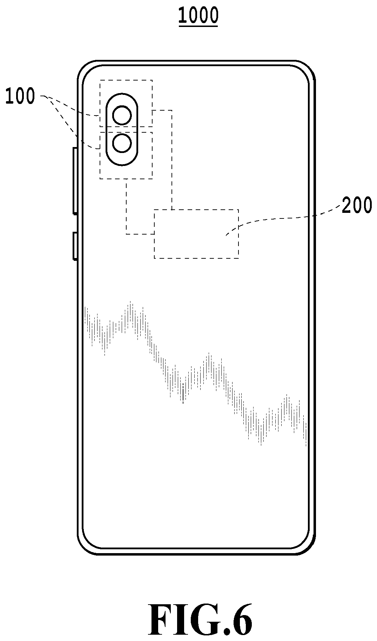

FIG. 6 shows a schematic diagram of an electronic device according to one embodiment of the present disclosure.

### Description of Embodiments

The following embodiments of a variable optical system of the present disclosure will be described with reference to the figures and an optical data. This variable optical system can be applied to cameras for electronic devices such as mobile terminal devices.

The variable optical system according to the present disclosure has a positive refractive power as a whole. The variable optical system comprises: a first lens group having the positive refractive power and including at least four aspherical surfaces; the first lens group is movable along a direction of an optical axis direction in a moving range; a second lens group including at least four aspherical surfaces, the second lens group is movable and is configured to be located on the optical axis or out of the optical path; and a third lens group. The variable optical system switches between a fist state and a second state. In the first state, the first lens group moves from a position close to an image side to a position close to an object side to focus from infinity to a near object, the second lens group is out of an optical path and does not act on an image formation, and the third lens group is located on the optical axis and close to the first lens group. In the second state, the second lens group is located on the optical axis and inserted into a part of a space occurred by the first lens group moving to the object side in the first state, and acts on image formation as a part of the variable optical system.

The invention is defined by the claims.

The variable optical system is also simply called as "optical system" in the description of the following embodiments.

Hereinafter, embodiments of the present disclosure are described in detail with reference to the drawings using examples to which specific numerical values are applied.

Examples 1 to 5 of the optical system are described below as shown in Table 1.

**Table 1**

| | | | | | |
|---|---|---|---|---|---|
| | Example 1 | Example 2 | Example 3 | Example 4 | Example 5 |
| EFL1 | 13.089 | 11.213 | 20.580 | 13.000 | 10.000 |
| EFL2 | 19.433 | 19.493 | 29.629 | 6.000 | 14.800 |
| TTL | 15.450 | 13.000 | 25.390 | 13.450 | 11.170 |
| FL1 | 9.422 | 9.111 | 14.465 | 9.450 | 6.090 |
| FL2 | -28.138 | -8.703 | -16.974 | 15.167 | -20.500 |
| FL3 | -11.610 | -8.804 | -14.562 | -11.700 | -38.140 |
| St | 4.000 | 5.241 | 6.685 | 4.000 | 3.300 |
| MgTTL | 3.100 | 3.541 | 3.541 | 3.100 | 3.400 |
| (i) FL1/EFL1 | 0.720 | 0.813 | 0.703 | 0.727 | 0.609 |
| (ii) EFL1/TTL | 0.847 | 0.863 | 0.811 | 0.967 | 0.895 |
| (iii) \|MAG\| | 0.60 | 0.70 | 0.21 | 1.00 | 0.30 |
| (iv) \|FL2/EFL1\| | 2.150 | 0.776 | 0.825 | 1.167 | 2.050 |
| (v) \|FL3/EFL2\| | 0.597 | 0.452 | 0.491 | 1.950 | 2.577 |
| (vi) St/MgTTL | 1.290 | 1.480 | 1.888 | 1.290 | 0.971 |

In the table 1, EFL1 is the focal length of the optical system in the first state, EFL2 is the focal length of the optical system in the second state, TTL indicates a distance on an optical axis from a surface vertex of a first lens to an image plane when focusing on infinite of the optical system in the first state, MAG is an optical magnification at a minimum object distance of the optical system, FL1 is the focal length of the first lens group, FL2 is the focal length of the second lens group, and FL3 is the focal length of the third lens group. St is a maximum amount of movement of the first lens group when focusing. MgTTL is a total lens length of the second lens group.

### (First Example)

FIG. 1-1 shows a schematic cross-sectional view of the optical system during focusing on infinity object in the first state according to the first example of the present disclosure. In the first state, the optical system according to the first example includes, from the object side along the optical axis OA, a first right angle prism R1 as a first reflective element, a first lens group G1, a third lens group G3, and a second right angle prism R2 as a second reflective element, and includes a second lens group G2 outside the optical path. Also, the optical system includes an image sensor, and the cover glass CG may be arranged on the image sensor.

FIG. 1-2 shows a schematic cross-sectional view of the optical system during focusing on the object at the minimum object distance in the first state, according to the first example of the present disclosure. During focusing on the object at the minimum object distance, the first lens group G1 is located on the object side.

FIG. 1-3 shows a schematic cross-sectional view of the optical system during focusing on the infinity object in the second state according to the first example of the present disclosure. In the second state, the second lens group G2 is arranged in the space on the optical path occurred by moving the first lens group G1 toward the object side.

FIG. 1-4 shows a schematic cross-sectional view of the optical system showing the bending direction of the optical axis by the reflective elements according to the first example of the present disclosure. As illustrated, the first reflective element R1 and the second reflective element R2 can bend the optical axis OA by approximately 90 degrees. Note that the second lens group G2 is not shown.

The first reflective element R1 is arranged closer to the object side than the first lens group G1 and bends the optical axis by approximately 90 degrees in the optical path from the object side to the image side. The second reflective element R2 is arranged closer to the image side than the third lens group G3 and bends the optical axis by approximately 90 degrees on the image side again. The first lens group G1 has a positive refractive power and functions as a focus lens group. The first lens group G1 is movable along a direction of the optical axis direction in a moving range. The position of the third lens group G3 on the optical axis is fixed. The second lens group G2 is inserted into and removed from the space on the optical path occurred by the movement of the first lens group G1 toward the object side, thereby switching the optical state of the optical system. In other words, the second lens group G2 is movable and is configured to be located on the optical axis or out of the optical path. The second lens group G2 may have a negative refractive power.

The first lens group G1 includes three lenses and has six aspherical surfaces. The third lens group G3 includes three lenses and has six aspherical surfaces. The second lens group G2 includes four lenses and has eight aspherical surfaces.

FIG. 1-1 shows the first state where the second lens group G2 is out of the optical path. In the first state, as shown in FIG. 1-2, by moving the first lens group G1 toward the object side, it is possible to perform focusing from infinity to a short distance object. Figure 1-3 shows the second state where the second lens group G2 is inserted in the space on the optical path between the first lens group G1 and the third lens group G3, which is occurred by moving the first lens group G1 toward the object side. As described above, the optical system according to the present example can switch between the first state and the second state by inserting or removing the second lens group G2 in the space on the optical path between the first lens group G1 and the third lens group G3. In this example, the second state has a longer focal length than the first state, and the optical system functions as a lens on the more telephoto side in the second state. Also in the second state, focusing can be performed by moving the first lens group G1 along the optical axis.

In this way, in the first state, the first lens group G1 moves from a position close to an image side to a position close to an object side to focus from infinity to a near object, the second lens group G2 is out of an optical path and does not act on an image formation, and the third lens group G3 is located on the optical axis and close to the first lens group. In the second state, the second lens group G2 is located on the optical axis and inserted into a part of a space occurred by the first lens group G1 moving to the object side in the first state, and acts on image formation as a part of the variable optical system. In this example, the third lens group G3 is a fix group and fixedly located on the optical axis, and in the second state, the third lens group G3 is located on the optical axis and close to the second lens group which is inserted in.

Further, the optical system may satisfy the condition TL1 < TL2, where TL1 indicates a distance from a nearest object surface of the first lens group G1 to an image surface in the first state; TL2 indicates a distance from the nearest object surface of first lens group G1 to the image surface in the second state. The same applies to other examples.

Table 1-1 shows the focal length, F-number, and image height in the first state (Position 1) and the second state (Position 2) of the optical system according to this example.

**(Table 1-1)**

| | Position 1 | Position 2 |
|---|---|---|
| Focal length | 13.089 | 19.433 |
| F number | 1.48 | 3.00 |
| Image height | 3.5 | 2.45 |

Table 1-2 shows the lens data in the first state of the optical system according to this example, specifically, the radius of curvature R and the lens thickness or separation D for each optical surface, and the refractive index nd and Abbe number vd at a wavelength of 587.56 nm (d-line).

**(Table 1-2)**

| | | R | D | nd | vd |
|---|---|---|---|---|---|
| | 0 | INF | D0 | | |
| | 1 | INF | 6.6 | 1.77 | 49.6 |
| | 2 | INF | D2 | | |
| * | 3 | 5.3914E+00 | 2.500 | 1.54 | 55.8 |
| * | 4 | -2.3363E+01 | 0.080 | | |
| * | 5 | 2.0974E+02 | 0.500 | 1.64 | 23.5 |
| * | 6 | 7.9632E+00 | 1.400 | | |
| * | 7 | 4.1323E+01 | 1.300 | 1.54 | 55.8 |
| * | 8 | -9.4958E+00 | D8 | | |
| * | 9 | 1.4318E+01 | 0.500 | 1.54 | 55.8 |
| * | 10 | 5.9692E+00 | 0.500 | | |
| * | 11 | 3.6953E+00 | 0.550 | 1.64 | 23.5 |
| * | 12 | 3.2225E+00 | 0.780 | | |
| * | 13 | 3.7118E+00 | 0.580 | 1.54 | 55.8 |
| * | 14 | 3.2459E+00 | 0.650 | | |
| | 15 | INF | 4.800 | 1.52 | 64.2 |
| | 16 | INF | 0.200 | | |
| | 17 | INF | 0.210 | 1.52 | 64.2 |
| | 18 | INF | 0.400 | | |

Table 1-3 shows the lens data in the second state of the optical system according to this example, specifically, the radius of curvature R and the lens thickness or separation D for each optical surface and the refractive index nd and Abbe number vd at a wavelength of 587.56 nm (d-line).

**(Table 1-3)**

| | | R | D | nd | vd |
|---|---|---|---|---|---|
| | 0 | INF | INF | | |
| | 1 | INF | 6.6 | 1.77 | 49.6 |
| | 2 | INF | D2 | | |
| * | 3 | 5.3914E+00 | 2.500 | 1.54 | 55.8 |
| * | 4 | -2.3363E+01 | 0.080 | | |
| * | 5 | 2.0974E+02 | 0.500 | 1.64 | 23.5 |
| * | 6 | 7.9632E+00 | 1.400 | | |
| * | 7 | 4.1323E+01 | 1.300 | 1.54 | 55.8 |
| * | 8 | -9.4958E+00 | 0.600 | | |
| * | 9 | -9.7012E+00 | 0.470 | 1.54 | 55.8 |
| * | 10 | -2.0774E+01 | 0.600 | | |
| * | 11 | -8.4869E+00 | 0.250 | 1.54 | 55.8 |
| * | 12 | -6.9760E+02 | 0.600 | | |
| * | 13 | -1.3810E+01 | 0.250 | 1.54 | 55.8 |
| * | 14 | 1.12E+01 | 0.330 | | |
| * | 15 | 2.55E+01 | 0.600 | 1.54 | 55.8 |
| * | 16 | -5.16E+00 | 0.600 | | |
| * | 17 | 1.4318E+01 | 0.500 | 1.54 | 55.8 |
| * | 18 | 5.9692E+00 | 0.500 | | |
| * | 19 | 3.6953E+00 | 0.550 | 1.64 | 23.5 |
| * | 20 | 3.2225E+00 | 0.780 | | |
| * | 21 | 3.7118E+00 | 0.580 | 1.54 | 55.8 |
| * | 22 | 3.2459E+00 | 0.650 | | |
| | 23 | INF | 4.800 | 1.52 | 64.2 |
| | 24 | INF | 0.200 | | |
| | 25 | INF | 0.210 | 1.52 | 64.2 |
| | 26 | INF | 0.400 | | |

Table 1-4 shows the lens thickness or separation D for D0, D2 and D8 in Tables 1-2 and 1-3. Table 1-4 shows data at infinity (INF) and minimum object distance (MOD).

**(Table 1-4)**

| | D0 | D2 | D8 |
|---|---|---|---|
| INF | INF | 5.950 | 0.500 |
| MOD | 24.000 | 1.950 | 4.500 |

Table 1-5 shows the aspherical coefficients for each optical surface in the first state of the optical system according to this example. An aspherical profile is expressed by the following equation. $z = \frac{{cr}^{2}}{1 + \sqrt{1 - \left(1+k\right) {c}^{2} {r}^{2}}} + {A}_{4} {r}^{4} + {A}_{6} {r}^{6} + {A}_{8} {r}^{8} + {A}_{10} {r}^{10} + {A}_{12} {r}^{12}$

Here, z is the sag of aspherical surface, c is the curvature at vertex, k is the Conic constant, r is the radial distance, and A is the aspherical coefficient..

**(Table 1-5)**

| | k | A₄ | A₆ | A₈ | A₁₀ | A₁₂ |
|---|---|---|---|---|---|---|
| 3 | 0.000 | -3.2964E-04 | -1.0387E-05 | 2.9210E-07 | -5.4327E-08 | 0.000 |
| 4 | 0.000 | 1.0964E-03 | -6.5461E-06 | -3.3556E-06 | 1.2208E-07 | 0.000 |
| 5 | 0.000 | 1.0530E-03 | -1.3622E-04 | 2.0621E-06 | 6.5423E-08 | 0.000 |
| 6 | 0.000 | 1.1847E-03 | -1.5310E-04 | -6.1806E-06 | 4.1368E-07 | 0.000 |
| 7 | 0.000 | 2.7317E-04 | -6.5815E-05 | -5.6819E-06 | 6.3711E-07 | 0.000 |
| 8 | 0.000 | 2.1955E-04 | 1.4742E-05 | -2.2185E-06 | 4.1102E-07 | 0.000 |
| 9 | 0.000 | 3.4433E-03 | 2.5424E-04 | -3.8213E-05 | 2.2277E-06 | 0.000 |
| 10 | 0.000 | 4.2271E-03 | -8.9898E-04 | 1.2053E-04 | -1.3407E-05 | 0.000 |
| 11 | 0.000 | -9.7348E-04 | -2.9522E-03 | 2.0554E-04 | -1.3337E-05 | 0.000 |
| 12 | 0.000 | -7.8457E-03 | -2.5602E-03 | 8.3431E-05 | 5.4148E-06 | 0.000 |
| 13 | 0.000 | -3.4033E-02 | 3.5248E-04 | 3.1695E-05 | 5.1939E-06 | 0.000 |
| 14 | 0.000 | -3.3294E-02 | 1.3436E-03 | 7.8809E-05 | -1.0701E-05 | 0.000 |

Table 1-6 shows the aspherical coefficients for each optical surface in the second state of the optical system according to this example.

**(Table 1-6)**

| | K | A₄ | A₆ | A₈ | A₁₀ | A₁₂ |
|---|---|---|---|---|---|---|
| 3 | 0.000 | -3.2964E-04 | -1.0387E-05 | 2.9210E-07 | -5.4327E-08 | 0.000 |
| 4 | 0.000 | 1.0964E-03 | -6.5461E-06 | -3.3556E-06 | 1.2208E-07 | 0.000 |
| 5 | 0.000 | 1.0530E-03 | -1.3622E-04 | 2.0621E-06 | 6.5423E-08 | 0.000 |
| 6 | 0.000 | 1.1847E-03 | -1.5310E-04 | -6.1806E-06 | 4.1368E-07 | 0.000 |
| 7 | 0.000 | 2.7317E-04 | -6.5815E-05 | -5.6819E-06 | 6.3711E-07 | 0.000 |
| 8 | 0.000 | 2.1955E-04 | 1.4742E-05 | -2.2185E-06 | 4.1102E-07 | 0.000 |
| 9 | 0.000 | 1.7343E-02 | -7.1683E-04 | -3.6418E-04 | 2.8119E-05 | 0.000 |
| 10 | 0.000 | 5.8327E-03 | 3.8691E-03 | -2.4731E-03 | 3.1561E-04 | 0.000 |
| 11 | 0.000 | -2.6059E-02 | 4.0315E-03 | -3.6893E-05 | 1.4457E-04 | 0.000 |
| 12 | 0.000 | -1.1190E-02 | -1.1002E-02 | 4.6882E-03 | -4.8161E-04 | 0.000 |
| 13 | 0.000 | -8.5611E-03 | 4.1851E-03 | -1.1087E-02 | 1.6517E-03 | 0.000 |
| 14 | 0.000 | -1.0670E-02 | 3.7600E-02 | -1.2066E-02 | 7.1301E-04 | 0.000 |
| 15 | 0.000 | -2.7356E-02 | 1.9116E-02 | -6.4468E-04 | -5.5692E-04 | 0.000 |
| 16 | 0.000 | -2.5592E-02 | 1.3855E-03 | -1.3701E-03 | 4.8153E-04 | 0.000 |
| 17 | 0.000 | 3.4433E-03 | 2.5424E-04 | -3.8213E-05 | 2.2277E-06 | 0.000 |
| 18 | 0.000 | 4.2271E-03 | -8.9898E-04 | 1.2053E-04 | -1.3407E-05 | 0.000 |
| 19 | 0.000 | -9.7348E-04 | -2.9522E-03 | 2.0554E-04 | -1.3337E-05 | 0.000 |
| 20 | 0.000 | -7.8457E-03 | -2.5602E-03 | 8.3431E-05 | 5.4148E-06 | 0.000 |
| 21 | 0.000 | -3.4033E-02 | 3.5248E-04 | 3.1695E-05 | 5.1939E-06 | 0.000 |
| 22 | 0.000 | -3.3294E-02 | 1.3436E-03 | 7.8809E-05 | -1.0701E-05 | 0.000 |

FIG. 1-5 shows spherical aberration, field curvature, and distortion for each wavelength according to the optical system of FIG. 1-1.

FIG. 1-6 shows a lateral aberration diagram according to the optical system of FIG. 1-1.

FIG. 1-7 shows spherical aberration, field curvature, and distortion for each wavelength according to the optical system of FIG. 1-2.

FIG. 1-8 shows a lateral aberration diagram according to the optical system of FIG. 1-2.

FIG. 1-9 shows spherical aberration, field curvature, and distortion for each wavelength according to the optical system of FIG. 1-3.

FIG. 1-10 shows a lateral aberration diagram according to the optical system of FIG. 1-3.

Thus, it can be seen from FIGs. 1-5 to 1-10 that each aberration is well corrected in the optical system according to this example.

### (Second Example)

FIG. 2-1 shows a schematic cross-sectional view of the optical system at infinity position in the first state according to the second example of the present disclosure. In the first state, the optical system according to the second example includes, from the object side along the optical axis OA, a first right angle prism R1 as a first reflective element, a first lens group G1, and a third lens group G3, and includes a second lens group G2 outside the optical path. Also, the optical system includes an image sensor, and the cover glass CG may be arranged on the image sensor.

FIG. 2-2 shows a schematic cross-sectional view of the optical system at the minimum object distance position in the first state, according to the second example of the present disclosure. In the optical system at the minimum object distance position, the first lens group G1 is located on the object side.

FIG. 2-3 shows a schematic cross-sectional view of the optical system at infinity position in the second state, according to the invention. In the second state, the second lens group G2 is arranged in the space on the optical path occurred by moving the first lens group G1 toward the object side, and moving the third lens group G3 out of the optical path.

FIG. 2-4 shows a schematic cross-sectional view of the optical system showing the bending direction of the optical axis by the reflective element according to the second example of the present disclosure. As illustrated, the first reflective element R1 can bend the optical axis OA by approximately 90 degrees. Note that the second lens group G2 is not shown.

The first reflective element R1 is arranged closer to the object side than the first lens group G1 and bends the optical axis by approximately 90 degrees in the optical path from the object side to the image side. The first lens group G1 has a positive refractive power and functions as a focus lens group. The first lens group G1 is movable along a direction of the optical axis direction in a moving range. The third lens group G3 is inserted into and removed from the optical path to switch optical states. The second lens group G2 is inserted into and removed from the space on the optical path occurred by the movement of the first lens group G1, and switches the optical state of the optical system. The second lens group G2 may have a negative refractive power.

The first lens group G1 includes three lenses and has six aspherical surfaces. The third lens group G3 includes three lenses and has six aspherical surfaces. The second lens group G2 includes three lenses and has six aspherical surfaces.

In the first state where the third lens group G3 is in the optical path and the second lens group G2 is out of the optical path, as shown in FIG. 2-1, the first lens group G1 moves to the object side, it is possible to perform focusing from infinity to a short distance object. As shown in Figure 2-3, the third lens group G3 moves out of the optical path, and instead the second lens group G2 is inserted into the space on the optical path occurred by the movement of the first lens group G1, thereby switching to the second optical state. That is, in this example, the third lens group G3 is movable and is out of the optical path in the second state. The second state has a longer focal length than the first state, and the optical system functions as a lens on the more telephoto side in the second state. Also in the second state, it is possible to perform focusing by moving the first lens group G1.

Table 2-1 shows the focal length, F number, and image height in the first state (Position 1) and the second state (Position 2) of the optical system according to this example.

**(Table 2-1)**

| | Position 1 | Position 2 |
|---|---|---|
| Focal length | 11.214 | 19.493 |
| F number | 1.470 | 3.016 |
| Image height | 3.5 | 3.5 |

Table 2-2 shows the lens data in the first state of the optical system according to this example, specifically, the radius of curvature R and the lens thickness or separation D for each optical surface, and the refractive index nd and Abbe number vd at a wavelength of 587.56 nm (d-line).

**(Table 2-2)**

| | R | D | nd | vd |
|---|---|---|---|---|
| 0 | INF | D0 | | |
| 1 | INF | 6.6 | 1.77 | 49.6 |
| 2 | INF | D2 | | |
| 3 | 5.4680E+00 | 3.177 | 1.54 | 55.8 |
| 4 | -8.3250E+00 | 0.060 | | |
| 5 | -1.1702E+01 | 0.460 | 1.64 | 23.5 |
| 6 | 1.2436E+01 | 1.264 | | |
| 7 | -3.7045E+01 | 0.850 | 1.54 | 55.8 |
| 8 | -6.9369E+00 | D8 | | |
| 9 | 9.5627E+00 | 0.490 | 1.54 | 55.8 |
| 10 | 3.6846E+00 | 0.558 | | |
| 11 | 4.5401E+00 | 0.725 | 1.57 | 37.4 |
| 12 | 1.2388E+01 | 1.965 | | |
| 13 | -8.0399E+00 | 1.150 | 1.54 | 55.8 |
| 14 | 1.48E+01 | 0.400 | | |
| 15 | INF | 0.210 | 1.52 | 64.2 |
| 16 | INF | 0.790 | | |

Table 2-3 shows the lens data in the second state of the optical system according to this example, specifically, the radius of curvature R and the lens thickness or separation D for each optical surface, and the refractive index nd and Abbe number vd at a wavelength of 587.56 nm (d-line).

**(Table 2-3)**

| | R | D | nd | vd |
|---|---|---|---|---|
| 0 | INF | INF | | |
| 1 | INF | 6.6 | 1.77 | 49.6 |
| 2 | INF | 1.538 | | |
| 3 | 5.4680E+00 | 3.177 | 1.54 | 55.8 |
| 4 | -8.3250E+00 | 0.060 | | |
| 5 | -1.1702E+01 | 0.460 | 1.64 | 23.5 |
| 6 | 1.2436E+01 | 1.264 | | |
| 7 | -3.7045E+01 | 0.850 | 1.54 | 55.8 |
| 8 | -6.9369E+00 | 0.409 | | |
| 9 | -6.1806E+00 | 0.490 | 1.54 | 55.8 |
| 10 | 3.0677E+00 | 0.063 | | |
| 11 | 2.4320E+00 | 0.725 | 1.57 | 37.4 |
| 12 | 2.3394E+01 | 1.113 | | |
| 13 | -6.8337E+00 | 1.150 | 1.54 | 55.8 |
| 14 | -2.39E+01 | 7.193 | | |
| 15 | INF | 0.210 | 1.52 | 64.2 |
| 16 | INF | 0.790 | | |

Table 2-4 shows the lens thickness or separation D for D0, D2 and D8 in Tables 2-2 and 2-3. Table 2-4 shows data at infinity (INF) and minimum object distance (MOD).

**(Table 2-4)**

| | D0 | D2 | D8 |
|---|---|---|---|
| INF | INF | 5.950 | 0.900 |
| MOD | 18.300 | 1.250 | 6.141 |

Tables 2-5 show the aspherical coefficients for each optical surface in the first state of the optical system according to this example.

**(Table 2-5)**

| | K | A₄ | A₆ | A₈ | A₁₀ | A₁₂ |
|---|---|---|---|---|---|---|
| 3 | 0.000 | -3.2284E-04 | -2.4034E-05 | -2.4989E-06 | 1.7009E-07 | -1.5788E-08 |
| 4 | 0.000 | 4.4490E-03 | -3.5749E-04 | 1.4814E-05 | -4.0511E-07 | 2.7906E-09 |
| 5 | 0.000 | 5.4353E-03 | -2.8624E-04 | -1.3472E-05 | 2.2932E-06 | -6.9772E-08 |
| 6 | 0.000 | 4.0268E-03 | 3.3001E-05 | -1.6638E-05 | -1.6481E-06 | 1.8584E-07 |
| 7 | 0.000 | 9.0362E-04 | -4.1044E-05 | 1.7366E-05 | -7.6826E-06 | 4.8003E-07 |
| 8 | 0.000 | 3.2637E-04 | -3.4392E-05 | 1.9925E-06 | -2.5898E-06 | 1.6155E-07 |
| 9 | 0.000 | -9.8821E-03 | 2.8629E-03 | -6.3492E-04 | 7.3547E-05 | -3.9321E-06 |
| 10 | 0.000 | -2.0677E-02 | 4.3588E-03 | -9.8068E-04 | 8.8982E-05 | -4.3672E-06 |
| 11 | 0.000 | -1.3428E-02 | 7.1700E-04 | -2.2295E-04 | 5.7236E-06 | -7.2377E-06 |
| 12 | 0.000 | -1.0336E-02 | -2.9322E-04 | 6.4711E-05 | -5.2428E-05 | 2.2163E-06 |
| 13 | 0.000 | -2.3702E-02 | 6.2926E-04 | -1.2829E-04 | -9.0659E-06 | 7.5692E-07 |
| 14 | 0.000 | -1.6100E-02 | 1.1473E-03 | -1.0551E-04 | 6.9748E-06 | -2.0893E-07 |

Table 2-6 shows the aspherical coefficients for each optical surface in the second state of the optical system according to this example.

**(Table 2-6)**

| | K | A₄ | A₆ | A₈ | A₁₀ | A₁₂ |
|---|---|---|---|---|---|---|
| 3 | 0.000 | -3.2284E-04 | -2.4034E-05 | -2.4989E-06 | 1.7009E-07 | -1.58E-08 |
| 4 | 0.000 | 4.4490E-03 | -3.5749E-04 | 1.4814E-05 | -4.0511E-07 | 2.79E-09 |
| 5 | 0.000 | 5.4353E-03 | -2.8624E-04 | -1.3472E-05 | 2.2932E-06 | -6.98E-08 |
| 6 | 0.000 | 4.0268E-03 | 3.3001E-05 | -1.6638E-05 | -1.6481E-06 | 1.86E-07 |
| 7 | 0.000 | 9.0362E-04 | -4.1044E-05 | 1.7366E-05 | -7.6826E-06 | 4.80E-07 |
| 8 | 0.000 | 3.2637E-04 | -3.4392E-05 | 1.9925E-06 | -2.5898E-06 | 1.62E-07 |
| 9 | 0.000 | 3.2027E-02 | -8.3055E-03 | 1.1743E-03 | -6.4035E-05 | -1.55E-06 |
| 10 | 0.000 | -3.6236E-02 | 2.6809E-02 | -8.2888E-03 | 8.4533E-04 | -2.43E-05 |
| 11 | 0.000 | -6.3974E-02 | 2.4645E-02 | -3.7721E-03 | -3.4636E-04 | 1.09E-04 |
| 12 | 0.000 | -8.9071E-04 | -7.9771E-03 | 5.7685E-03 | -1.5358E-03 | 1.83E-04 |
| 13 | 0.000 | -1.6826E-02 | -1.9772E-03 | 6.8767E-04 | -1.8449E-04 | -5.95E-06 |
| 14 | 0.000 | -1.0404E-02 | 9.9513E-05 | 1.1866E-04 | -4.0003E-05 | 3.33E-06 |

FIG. 2-5 shows spherical aberration, field curvature, and distortion for each wavelength according to the optical system of FIG. 2-1.

FIG. 2-6 shows a lateral aberration diagram according to the optical system of FIG. 2-1.

FIG. 2-7 shows spherical aberration, field curvature, and distortion for each wavelength according to the optical system in FIG. 2-2.

FIG. 2-8 shows a lateral aberration diagram according to the optical system of FIG. 2-2.

FIG. 2-9 shows spherical aberration, field curvature, and distortion for each wavelength according to the optical system of FIG. 2-3.

FIG. 2-10 shows a lateral aberration diagram according to the optical system of FIG. 2-3.

Thus, it can be seen from FIGs. 2-5 to 2-10 that each aberration is well corrected in the optical system according to this example.

### (Third Example)

FIG. 3-1 shows a schematic cross-sectional view of the optical system at infinity position in the first state according to the third example of the present disclosure. In the first state, the optical system according to the third example includes, from the object side along the optical axis OA, a first right angle prism R1 as a first reflective element, a first lens group G1, a third lens group G3, and a second right angle prism R2 as a second reflective element, and includes a second lens group G2 outside the optical path. Also, the optical system includes an image sensor, and the cover glass CG may be arranged on the image sensor.

FIG. 3-2 shows a schematic cross-sectional view of the optical system at the minimum object distance position in the first state, according to the third example of the present disclosure. In the optical system at the minimum object distance position, the first lens group G1 is located on the object side.

FIG. 3-3 shows a schematic cross-sectional view of the optical system at infinity position in the second state according to the invention. In the second state, the second lens group G2 is arranged in the space on the optical path occurred by moving the first lens group G1 toward the object side and moving the third lens group G3 out of the optical path.

FIG. 3-4 shows a schematic cross-sectional view of the optical system showing the bending direction of the optical axis by the reflective elements according to the third example of the present disclosure. As illustrated, the first reflective element R1 and the second reflective element R2 can bend the optical axis OA by approximately 90 degrees. Note that the second lens group G2 is not shown.

The first reflective element R1 is arranged closer to the object side than the first lens group G1 and bends the optical axis by approximately 90 degrees in the optical path from the object side to the image side. The second reflective element R2 is arranged closer to the image side than the third lens group G3 and bends the optical axis by approximately 90 degrees on the image side again. The first lens group G1 has a positive refractive power and functions as a focus lens group. The first lens group G1 is movable along a direction of the optical axis direction in a moving range. The third lens group G3 is inserted into and removed from the optical path to switch optical states. The second lens group G2 is also inserted into and removed from the optical path to switch optical states. In particular, the second lens group G2 is arranged in the space on the optical path occurred by moving the first lens group G1 toward the object side and moving the third lens group G3 out of the optical path. The second lens group G2 may have a negative refractive power.

The first lens group G1 includes three lenses and has six aspherical surfaces. The third lens group G3 includes two lenses and has four aspherical surfaces. The second lens group G2 includes two lenses and has four aspherical surfaces.

In the first state where the third lens group G3 is in the optical path and the second lens group G2 is out of the optical path, as shown in FIG. 3-1, the first lens group G1 moves to the object side, it is possible to perform focusing from infinity to a short distance object. As shown in FIG. 3-3, the third lens group G3 is moved out of the optical path, and the second lens group G2 is inserted into the space on the optical path instead, thereby switching to the second optical state. The second state has a longer focal length than the first state, and the optical system functions as a lens on the more telephoto side in the second state. Also in the second state, it is possible to perform focusing by moving the first lens group G1.

Table 3-1 shows the focal length, F number, and image height in the first state (Position 1) and the second state (Position 2) of the optical system according to this example.

**(Table 3-1)**

| | Position 1 | Position 2 |
|---|---|---|
| Focal length | 20.587 | 29.629 |
| F number | 2.0 | 4.23 |
| Image height | 5.1 | 5.1 |

Table 3-2 shows the lens data in the first state of the optical system according to this example, specifically, the radius of curvature R and the lens thickness or separation D for each optical surface, and the refractive index nd and Abbe number vd at a wavelength of 587.56 nm (d-line).

**(Table 3-2)**

| | R | D | nd | vd |
|---|---|---|---|---|
| 0 | INF | D0 | | |
| 1 | INF | 7.2 | 1.77 | 49.6 |
| 2 | INF | D2 | | |
| 3 | 1.0020E+01 | 3.650 | 1.53 | 55.6 |
| 4 | -1.2123E+01 | 0.300 | | |
| 5 | -8.3249E+00 | 0.500 | 1.62 | 25.9 |
| 6 | -3.0133E+01 | 2.349 | | |
| 7 | -1.9667E+01 | 2.350 | 1.54 | 55.8 |
| 8 | -8.7608E+00 | 0.850 | | |
| 9 | -6.0316E+00 | 1.000 | 1.54 | 55.8 |
| 10 | -6.5338E+00 | 3.488 | | |
| 11 | 1.0104E+01 | 1.200 | 1.54 | 55.8 |
| 12 | 4.8803E+00 | 1.200 | | |
| 13 | INF | 7.600 | 1.59 | 61.3 |
| 14 | INF | 0.200 | | |
| 15 | INF | 0.210 | 1.52 | 64.2 |
| 16 | INF | 0.490 | | |

Table 3-3 shows the lens data in the second state of the optical system according to this example, specifically, the radius of curvature R and the lens thickness or separation D for each optical surface, and the refractive index nd and Abbe number vd at a wavelength of 587.56 nm (d-line).

**(Table 3-3)**

| | R | D | nd | vd |
|---|---|---|---|---|
| 0 | INF | INF | | |
| 1 | INF | 7.2 | 1.77 | 49.6 |
| 2 | INF | 0.550 | | |
| 3 | 1.0020E+01 | 3.650 | 1.53 | 55.6 |
| 4 | -1.2123E+01 | 0.300 | | |
| 5 | -8.3249E+00 | 0.500 | 1.62 | 25.9 |
| 6 | -3.0133E+01 | 2.349 | | |
| 7 | -1.9667E+01 | 2.350 | 1.54 | 55.8 |
| 8 | -8.7608E+00 | 2.350 | | |
| 9 | 2.8983E+01 | 1.000 | 1.54 | 55.8 |
| 10 | 6.2826E+00 | 4.485 | | |
| 11 | -5.3865E+00 | 1.200 | 1.54 | 55.8 |
| 12 | -6.1040E+00 | 3.226 | | |
| 13 | INF | 7.600 | 1.59 | 61.3 |
| 14 | INF | 0.200 | | |
| 15 | INF | 0.210 | 1.52 | 64.2 |
| 16 | INF | 0.490 | | |

Table 3-4 shows the lens thickness or separation D for D0, D2 and D8 in Tables 3-2 and 3-3. Table 3-4 shows data at infinity (INF) and minimum object distance (MOD).

**(Table 3-4)**

| | D0 | D2 | D8 |
|---|---|---|---|
| INF | INF | 5.950 | 0.900 |
| MOD | 18.300 | 1.250 | 6.141 |

Table 3-5 shows the aspherical coefficients for each optical surface in the first state of the optical system according to this example.

**(Table 3-5)**

| | K | A₄ | A₆ | A₈ | A₁₀ | A₁₂ |
|---|---|---|---|---|---|---|
| 3 | 0.000 | -4.9089E-05 | -5.9695E-06 | -1.7484E-07 | -7.0278E-09 | 0.000 |
| 4 | 0.000 | 3.5649E-04 | -5.6125E-06 | -1.6500E-07 | -5.7084E-10 | 0.000 |
| 5 | 0.000 | 2.8271E-03 | -5.2039E-05 | 8.9492E-07 | -8.7120E-09 | 0.000 |
| 6 | 0.000 | 2.2950E-03 | -1.0579E-05 | 4.3754E-08 | 4.1999E-09 | 0.000 |
| 7 | 0.000 | -6.9241E-04 | 6.4296E-05 | -2.3428E-06 | 6.7656E-08 | 0.000 |
| 8 | 0.000 | -2.3080E-04 | 2.7697E-05 | -1.2977E-06 | 3.7990E-08 | 0.000 |
| 9 | 0.000 | 4.4120E-03 | -1.3860E-04 | 4.0727E-06 | -6.5703E-08 | 0.000 |
| 10 | 0.000 | 4.1747E-03 | -1.3113E-04 | 3.2383E-06 | -5.6295E-08 | 0.000 |
| 11 | 0.000 | -2.0373E-03 | -9.6350E-05 | 6.0943E-06 | -1.5991E-07 | 0.000 |
| 12 | 0.000 | -3.6463E-03 | -6.9263E-05 | 5.7520E-06 | -2.1638E-07 | 0.000 |

Table 3-6 shows the aspherical coefficients for each optical surface in the second state of the optical system according to this example.

**(Table 3-6)**

| | K | A₄ | A₆ | A₈ | A₁₀ | A₁₂ |
|---|---|---|---|---|---|---|
| 3 | 0.000 | -4.9089E-05 | -5.9695E-06 | -1.7484E-07 | -7.0278E-09 | 0.000 |
| 4 | 0.000 | 3.5649E-04 | -5.6125E-06 | -1.6500E-07 | -5.7084E-10 | 0.000 |
| 5 | 0.000 | 2.8271E-03 | -5.2039E-05 | 8.9492E-07 | -8.7120E-09 | 0.000 |
| 6 | 0.000 | 2.2950E-03 | -1.0579E-05 | 4.3754E-08 | 4.1999E-09 | 0.000 |
| 7 | 0.000 | -6.9241E-04 | 6.4296E-05 | -2.3428E-06 | 6.7656E-08 | 0.000 |
| 8 | 0.000 | -2.3080E-04 | 2.7697E-05 | -1.2977E-06 | 3.7990E-08 | 0.000 |
| 9 | 0.000 | 3.1883E-03 | -1.1749E-04 | 2.2293E-06 | 5.0775E-09 | 0.000 |
| 10 | 0.000 | 4.6396E-03 | -5.5063E-06 | 1.1911E-06 | 4.8771E-07 | 0.000 |
| 11 | 0.000 | 5.9721E-04 | 9.6279E-05 | -8.5157E-06 | 4.2625E-07 | 0.000 |
| 12 | 0.000 | -2.1651E-04 | 2.3749E-05 | -3.2840E-06 | 5.7871E-08 | 0.000 |

FIG. 3-5 shows spherical aberration, field curvature, and distortion for each wavelength according to the optical system of FIG. 3-1.

FIG. 3-6 shows a lateral aberration diagram according to the optical system of FIG. 3-1.

FIG. 3-7 shows spherical aberration, field curvature, and distortion for each wavelength according to the optical system of FIG. 3-2.

FIG. 3-8 shows a lateral aberration diagram according to the optical system of FIG. 3-2.

FIG. 3-9 shows spherical aberration, field curvature, and distortion for each wavelength according to the optical system of FIG. 3-3.

Fig. 3-10 shows a lateral aberration diagram according to the optical system of Fig. 3-3.

Thus, it can be seen from FIGs. 3-5 to 3-10 that each aberration is well corrected in the optical system according to this example.

### (Fourth Example)

FIG. 4-1 shows a schematic cross-sectional view of the optical system at infinity position in the first state, according to the fourth example of the present disclosure. In the first state, the optical system according to the fourth example includes, from the object side along the optical axis OA, a fist right angle prism R1 as a first reflective element, a first lens group G1, a third lens group G3, and a second right angle prism R2 as a second reflective element, and includes a second lens group G2 outside the optical path. Also, the optical system includes an image sensor, and the cover glass CG may be arranged on the image sensor.

FIG. 4-2 shows a schematic cross-sectional view of the optical system at the minimum object distance position in the first state, according to the fourth example of the present disclosure. In the optical system at the minimum object distance position, the first lens group G1 is located on the object side.

FIG. 4-3 shows a schematic cross-sectional view of the optical system at infinity position in the second state, according to the fourth example of the present disclosure. In the second state, the second lens group G2 is arranged in the space on the optical path occurred by moving the first lens group G1 toward the object side.

FIG. 4-4 shows a schematic cross-sectional view of an optical system showing the bending direction of the optical axis by the reflective elements according to the fourth example of the present disclosure. As illustrated, the first reflective element R1 and the second reflective element R2 can bend the optical axis OA by approximately 90 degrees. Note that the second lens group G2 is not shown.

The first reflective element R1 is arranged closer to the object side than the first lens group G1 and bends the optical axis by approximately 90 degrees in the optical path from the object side to the image side. The second reflective element R2 is arranged closer to the image side than the third lens group G3 and bends the optical axis by approximately 90 degrees on the image side again. The first lens group G1 has a positive refractive power and functions as a focus lens group. The first lens group G1 is movable along a direction of the optical axis direction in a moving range. The position of the third lens group G3 on the optical axis is fixed. The second lens group G2 is inserted into and removed from the space on the optical path occurred by the movement of the first lens group G1 toward the object side, thereby switching the optical state of the optical system. The second lens group G2 may have a negative refractive power.

The first lens group G1 includes three lenses and has six aspherical surfaces. The third lens group G3 includes three lenses and has six aspherical surfaces. The second lens group G2 includes four lenses and has eight aspherical surfaces.

In the first state where the second lens group G2 is out of the optical path as shown in FIG. 4-1, the first lens group G1 moves toward the object side as shown in FIG. 4-2, it is possible to perform focusing from infinity to a short-distance object. As shown in FIG. 4-3, the second lens group G2 is inserted into the space on the optical path between the first lens group G1 and the third lens group G3, which is occurred by moving the first lens group G1 toward the object side, thereby switching to the second optical state. The second state has a higher magnification than the first state, and the optical system functions as a macro lens in the second state. Also in the second state, it is possible to perform focusing by moving the first lens group G1.

Table 4-1 shows the focal length, F-number, and image height in the first state (Position 1) and the second state (Position 2) of the optical system according to this example. In this example, the optical magnification is changed to -0.95, and the macro function is improved in the second state.

**(Table 4-1)**

| | Position 1 | Position 2 |
|---|---|---|
| Optical Magnification | -0.10 | -0.95 |
| F number | 1.6 | 3.0 |
| Image height | 3.5 | 3.5 |

Table 4-2 shows the lens data in the first state of the optical system according to this example, specifically, the radius of curvature R and the lens thickness or separation D for each optical surface, and the refractive index nd and Abbe number vd at a wavelength of 587.56 nm (d-line).

**(Table 4-2)**

| | R | D | nd | vd |
|---|---|---|---|---|
| 0 | INF | D0 | | |
| 1 | INF | 6.6 | 1.77 | 49.6 |
| 2 | INF | D2 | | |
| 3 | 5.3659E+00 | 2.500 | 1.54 | 55.8 |
| 4 | -2.4317E+01 | 0.080 | | |
| 5 | -3.5883E+02 | 0.500 | 1.64 | 23.5 |
| 6 | 8.2790E+00 | 1.400 | | |
| 7 | 4.3450E+01 | 1.300 | 1.54 | 55.8 |
| 8 | -9.0539E+00 | D8 | | |
| 9 | 1.5025E+01 | 0.500 | 1.54 | 55.8 |
| 10 | 6.0911E+00 | 0.500 | | |
| 11 | 3.4958E+00 | 0.550 | 1.64 | 23.5 |
| 12 | 3.1254E+00 | 0.780 | | |
| 13 | 3.7357E+00 | 0.580 | 1.54 | 55.8 |
| 14 | 3.1819E+00 | 0.650 | | |
| 15 | INF | 4.800 | 1.52 | 64.2 |
| 16 | INF | 0.200 | | |
| 17 | INF | 0.210 | 1.52 | 64.2 |
| 18 | INF | 0.400 | | |

Table 4-3 shows the lens data in the second state of the optical system according to this example, specifically, the radius of curvature R and the lens thickness or separation D for each optical surface, and the refractive index nd and Abbe number vd at a wavelength of 587.56 nm (d-line).

**(Table 4-3)**

| | R | D | nd | vd |
|---|---|---|---|---|
| 0 | INF | 7 | | |
| 1 | INF | 6.6 | 1.77 | 49.6 |
| 2 | INF | 2.450 | | |
| 3 | 5.3659E+00 | 2.500 | 1.54 | 55.8 |
| 4 | -2.4317E+01 | 0.080 | | |
| 5 | -3.5883E+02 | 0.500 | 1.64 | 23.5 |
| 6 | 8.2790E+00 | 1.400 | | |
| 7 | 4.3450E+01 | 1.300 | 1.54 | 55.8 |
| 8 | -9.0539E+00 | 0.300 | | |
| 9 | 3.2211E+00 | 1.070 | 1.54 | 55.8 |
| 10 | 1.2082E+01 | 0.300 | | |
| 11 | -2.5865E+01 | 0.250 | 1.66 | 20.4 |
| 12 | 4.4082E+00 | 0.400 | | |
| 13 | -2.9190E+00 | 0.250 | 1.54 | 55.8 |
| 14 | -4.03E+00 | 0.230 | | |
| 15 | 2.61E+00 | 0.600 | 1.64 | 23.5 |
| 16 | 5.65E+00 | 0.600 | | |
| 17 | 1.5025E+01 | 0.500 | 1.54 | 55.8 |
| 18 | 6.0911E+00 | 0.500 | | |
| 19 | 3.4958E+00 | 0.550 | 1.64 | 23.5 |
| 20 | 3.1254E+00 | 0.780 | | |
| 21 | 3.7357E+00 | 0.580 | 1.54 | 55.8 |
| 22 | 3.1819E+00 | 0.650 | | |
| 23 | INF | 4.800 | 1.52 | 64.2 |
| 24 | INF | 0.200 | | |
| 25 | INF | 0.210 | 1.52 | 64.2 |
| 26 | INF | 0.400 | | |

Table 4-4 shows the lens thickness or separation D for D0, D2 and D8 in Tables 4-2 and 4-3. Table 4-1 shows data at infinity (INF) and minimum object distance (MOD).

**(Table 4-4)**

| | D0 | D2 | D8 |
|---|---|---|---|
| INF | INF | 5.950 | 0.500 |
| MOD | 24.000 | 1.950 | 4.500 |

Table 4-5 shows the aspherical coefficients for each optical surface in the first state of the optical system according to this example.

**(Table 4-5)**

| | K | A₄ | A₆ | A₈ | A₁₀ | A₁₂ |
|---|---|---|---|---|---|---|
| 3 | 0.000 | -3.3488E-04 | -1.4140E-05 | 2.6854E-07 | -6.0078E-08 | 0.000 |
| 4 | 0.000 | 1.0551E-03 | -9.6455E-06 | -3.3295E-06 | 1.3085E-07 | 0.000 |
| 5 | 0.000 | 1.0981E-03 | -1.3315E-04 | 2.1148E-06 | 6.8160E-08 | 0.000 |
| 6 | 0.000 | 1.1867E-03 | -1.5220E-04 | -5.8960E-06 | 4.2866E-07 | 0.000 |
| 7 | 0.000 | 1.7062E-04 | -6.9200E-05 | -5.6207E-06 | 6.5768E-07 | 0.000 |
| 8 | 0.000 | 1.9109E-04 | 1.9649E-05 | -2.5250E-06 | 3.7702E-07 | 0.000 |
| 9 | 0.000 | 3.6816E-03 | 2.5763E-04 | -3.8181E-05 | 2.6568E-06 | 0.000 |
| 10 | 0.000 | 3.8395E-03 | -8.7122E-04 | 1.2730E-04 | -1.3459E-05 | 0.000 |
| 11 | 0.000 | -1.8224E-03 | -3.0503E-03 | 2.0921E-04 | -1.4449E-05 | 0.000 |
| 12 | 0.000 | -7.8190E-03 | -2.7153E-03 | 5.5869E-05 | 8.9274E-06 | 0.000 |
| 13 | 0.000 | -0.03523041 | 0.000321162 | 1.37493E-05 | 9.21225E-06 | 0.000 |
| 14 | 0.000 | -0.03546426 | 0.001332659 | 0.00010622 | -1.3716E-05 | 0.000 |

Table 4-6 shows the aspherical coefficients for each optical surface in the second state of the optical system according to this example.

**(Table 4-6)**

| | K | A₄ | A₆ | A₈ | A₁₀ | A₁₂ |
|---|---|---|---|---|---|---|
| 3 | 0.000 | -3.3488E-04 | -1.4140E-05 | 2.6854E-07 | -6.0078E-08 | 0.000 |
| 4 | 0.000 | 1.0551E-03 | -9.6455E-06 | -3.3295E-06 | 1.3085E-07 | 0.000 |
| 5 | 0.000 | 1.0981E-03 | -1.3315E-04 | 2.1148E-06 | 6.8160E-08 | 0.000 |
| 6 | 0.000 | 1.1867E-03 | -1.5220E-04 | -5.8960E-06 | 4.2866E-07 | 0.000 |
| 7 | 0.000 | 1.7062E-04 | -6.9200E-05 | -5.6207E-06 | 6.5768E-07 | 0.000 |
| 8 | 0.000 | 1.9109E-04 | 1.9649E-05 | -2.5250E-06 | 3.7702E-07 | 0.000 |
| 9 | 0.000 | -2.1938E-03 | -2.8458E-04 | 1.4003E-05 | -2.0627E-05 | 0.000 |
| 10 | 0.000 | -6.9945E-05 | -2.4313E-03 | 1.4619E-04 | -3.4255E-07 | 0.000 |
| 11 | 0.000 | -6.5218E-03 | -5.0278E-04 | -3.9671E-06 | 8.9394E-06 | 0.000 |
| 12 | 0.000 | -3.2211E-02 | 1.3245E-03 | 1.4545E-04 | -1.0104E-05 | 0.000 |
| 13 | 0.000 | 0.065917615 | -0.00532485 | -0.00016719 | 7.37377E-05 | 0.000 |
| 14 | 0.000 | 0.068129837 | -0.00198338 | -0.00011244 | 2.60871E-05 | 0.000 |
| 15 | 0.000 | -0.012307 | -0.00115286 | 0.00011649 | -1.4455E-05 | 0.000 |
| 16 | 0.000 | 0.003802905 | -0.00065991 | -0.00015195 | 2.61089E-05 | 0.000 |
| 17 | 0.000 | 3.6816E-03 | 2.5763E-04 | -3.8181E-05 | 2.6568E-06 | 0.000 |
| 18 | 0.000 | 3.8395E-03 | -8.7122E-04 | 1.2730E-04 | -1.3459E-05 | 0.000 |
| 19 | 0.000 | -1.8224E-03 | -3.0503E-03 | 2.0921E-04 | -1.4449E-05 | 0.000 |
| 20 | 0.000 | -7.8190E-03 | -2.7153E-03 | 5.5869E-05 | 8.9274E-06 | 0.000 |
| 21 | 0.000 | -0.03523041 | 0.000321162 | 1.37493E-05 | 9.21225E-06 | 0.000 |
| 22 | 0.000 | -0.03546426 | 0.001332659 | 0.00010622 | -1.3716E-05 | 0.000 |

FIG. 4-5 shows spherical aberration, field curvature, and distortion for each wavelength according to the optical system of FIG. 4-1.

FIG. 4-6 shows a lateral aberration diagram according to the optical system of FIG. 4-1.

FIG. 4-7 shows spherical aberration, field curvature, and distortion for each wavelength according to the optical system in FIG. 4-2.

FIG. 4-8 shows a lateral aberration diagram according to the optical system of FIG. 4-2.

FIG. 4-9 shows spherical aberration, field curvature, and distortion for each wavelength according to the optical system in FIG. 4-3.

FIG. 4-10 shows a lateral aberration diagram according to the optical system of FIG. 4-3.

Thus, it can be seen from FIGs. 4-5 to 4-10 that each aberration is well corrected in the optical system according to this example.

### (Fifth Example)

FIG. 5-1 shows a schematic cross-sectional view of the optical system at infinity position in the first state, according to the fifth example of the present disclosure. In the first state, the optical system according to the fifth example includes, from the object side along the optical axis OA, a first right angle prism R1 as a first reflective element, a first lens group G1, and a third lens group G3 and includes a second lens group G2 outside the optical path. Also, the optical system includes an image sensor, and the cover glass CG may be arranged on the image sensor.

FIG. 5-2 shows a schematic cross-sectional view of the optical system at the minimum object distance position in the first state, according to the fifth example of the present disclosure. In the optical system at the minimum object distance position, the first lens group G1 is located on the object side.

FIG. 5-3 shows a schematic cross-sectional view of the optical system at infinity position in the second state, according to the fifth example of the present disclosure. In the second state, the second lens group G2 is arranged in the space on the optical path occurred by moving the first lens group G1 toward the object side.

FIG. 5-4 shows a schematic cross-sectional view of an optical system showing the bending direction of the optical axis by the reflective element according to the fifth example of the present disclosure. As illustrated, the first reflective element R1 can bend the optical axis OA by approximately 90 degrees. Note that the second lens group G2 is not shown.

The first reflective element R1 is arranged closer to the object side than the first lens group G1 and bends the optical axis by approximately 90 degrees in the optical path from the object side to the image side. The first lens group G1 has a positive refractive power and functions as a focus lens group. The first lens group G1 is movable along a direction of the optical axis direction in a moving range. The position of the third lens group G3 on the optical axis is fixed. The second lens group G2 is inserted into and removed from the space on the optical path occurred by the movement of the first lens group G1 toward the object side, thereby switching the optical state of the optical system. The second lens group G2 may have a negative refractive power.

The first lens group G1 includes three lenses and has six aspherical surfaces. The third lens group G3 includes three lenses and has six aspherical surfaces. The second lens group G2 includes three lenses and has six aspherical surfaces.

In the first state where the second lens group G2 is out of the optical path, as shown in FIG. 5-1, the first lens group G1 moves toward the object side, as shown in FIG. 5-2, it is possible to perform focusing from infinity to a short-distance object. As shown in FIG. 5-3, the second lens group G2 is inserted into the space on the optical path between the first lens group G1 and the third lens group G3, which is occurred by moving the first lens group G1 toward the object side, thereby switching to the second optical state. The second state has a longer focal length than the first state, so the optical system functions as a lens on the more telephoto side in the second state. Also in the second state, it is possible to perform focusing by moving the first lens group G1 along the optical axis.

Table 5-1 shows the focal length, F number, and image height in the first state (Position 1) and the second state (Position 2) of the optical system according to this example.

**(Table 5-1)**

| | Position 1 | Position 2 |
|---|---|---|
| EFL | 10.000 | 14.900 |
| F number | 1.200 | 2.400 |
| Image height | 3.5 | 2.1 |

Table 5-2 shows the lens data in the first state of the optical system according to this example, specifically, the radius of curvature R and the lens thickness or separation D for each optical surface, and the refractive index nd and Abbe number vd at a wavelength of 587.56 nm (d-line).

**(Table 5-2)**

| | R | D | nd | vd |
|---|---|---|---|---|
| 0 | INF | D0 | | |
| 1 | INF | 6.6 | 1.77 | 49.6 |
| 2 | INF | D2 | | |
| 3 | 4.4861E+00 | 3.600 | 1.54 | 55.8 |
| 4 | -6.1669E+01 | 0.060 | | |
| 5 | 8.1340E+00 | 0.500 | 1.64 | 23.5 |
| 6 | 2.9588E+00 | 1.250 | | |
| 7 | 7.7753E+00 | 1.030 | 1.54 | 55.8 |
| 8 | -3.7367E+01 | D8 | | |
| 9 | -5.7130E+01 | 0.490 | 1.54 | 55.8 |
| 10 | 1.9479E+01 | 0.350 | | |
| 11 | 3.3755E+00 | 0.810 | 1.64 | 23.5 |
| 12 | 3.4652E+00 | 0.570 | | |
| 13 | 4.3613E+00 | 1.060 | 1.54 | 55.8 |
| 14 | 3.7970E+00 | 0.800 | | |
| 15 | INF | 0.210 | 1.52 | 64.2 |
| 16 | INF | 0.790 | | |

Table 5-3 shows the lens data in the second state of the optical system according to this example, specifically, the radius of curvature R and the lens thickness or separation D for each optical surface, and the refractive index nd and Abbe number vd at a wavelength of 587.56 nm (d-line).

**(Table 5-3)**

| | R | D | nd | vd |
|---|---|---|---|---|
| 0 | INF | 7 | | |
| 1 | INF | 6.6 | 1.77 | 49.6 |
| 2 | INF | 1.300 | | |
| 3 | 4.4861E+00 | 3.600 | 1.54 | 55.8 |
| 4 | -6.1669E+01 | 0.060 | | |
| 5 | 8.1340E+00 | 0.500 | 1.64 | 23.5 |
| 6 | 2.9588E+00 | 1.250 | | |
| 7 | 7.7753E+00 | 1.030 | 1.54 | 55.8 |
| 8 | -3.7367E+01 | 1.050 | | |
| 9 | -1.6869E+01 | 0.450 | 1.54 | 55.8 |
| 10 | -5.2243E+01 | 0.600 | | |
| 11 | -1.2619E+01 | 0.400 | 1.54 | 55.8 |
| 12 | 5.7634E+00 | 0.530 | | |
| 13 | -6.1898E+01 | 0.920 | 1.54 | 55.8 |
| 14 | -5.35E+00 | 0.500 | | |
| 15 | -5.7130E+01 | 0.490 | 1.54 | 55.8 |
| 16 | 1.9479E+01 | 0.350 | | |
| 17 | 3.3755E+00 | 0.810 | 1.64 | 23.5 |
| 18 | 3.4652E+00 | 0.570 | | |
| 19 | 4.3613E+00 | 1.060 | 1.54 | 55.8 |
| 20 | 3.7970E+00 | 0.800 | | |
| 21 | INF | 0.210 | 1.52 | 64.2 |
| 22 | INF | 0.790 | | |

Table 5-4 shows the lens thickness or separation D for D0, D2 and D8 in Tables 5-2 and 5-3. Table 5-4 shows data at infinity (INF) and minimum object distance (MOD).

**(Table 5-4)**

| | D0 | D2 | D8 |
|---|---|---|---|
| INF | INF | 4.600 | 1.150 |
| MOD | 39.000 | 1.000 | 4.750 |

Table 5-5 shows the aspherical coefficients for each optical surface in the first state of the optical system according to this example.

**(Table 5-5)**

| | K | A₄ | A₆ | A₈ | A₁₀ | A₁₂ |
|---|---|---|---|---|---|---|
| 3 | 0.000 | -1.9660E-04 | -2.1936E-06 | 1.4422E-05 | 4.5298E-08 | 0.000 |
| 4 | 0.000 | 4.4540E-03 | 9.4317E-05 | -9.2959E-04 | -2.9898E-06 | 0.000 |
| 5 | 0.000 | -1.1897E-02 | 4.4846E-07 | 8.8073E-04 | -1.3297E-06 | 0.000 |
| 6 | 0.000 | -1.8362E-02 | -1.6496E-05 | 1.2263E-03 | -4.8609E-06 | 0.000 |
| 7 | 0.000 | 2.9031E-03 | 1.0528E-04 | -1.2329E-03 | -7.2704E-06 | 0.000 |
| 8 | 0.000 | 2.4947E-03 | 5.1464E-05 | -8.3939E-04 | -5.2730E-06 | 0.000 |
| 9 | 0.000 | 5.0335E-03 | -2.4881E-05 | 6.0727E-04 | -1.9859E-06 | 0.000 |
| 10 | 0.000 | -3.6813E-03 | 8.4378E-05 | 8.7888E-04 | -1.2349E-05 | 0.000 |
| 11 | 0.000 | -6.6123E-03 | 2.1697E-04 | -1.7951E-03 | -1.5795E-05 | 0.000 |
| 12 | 0.000 | -8.7149E-03 | 1.3767E-04 | -1.6175E-03 | -6.9961E-06 | 0.000 |
| 13 | 0.000 | -0.03060162 | 8.5596E-05 | 0.001452757 | -8.4883E-06 | 0.000 |
| 14 | 0.000 | -0.02559864 | -1.2644E-05 | 0.001754969 | -3.3904E-06 | 0.000 |

Table 5-6 shows the aspherical coefficients for each optical surface in the second state of the optical system according to this example.

**(Table 5-6)**

| | K | A₄ | A₆ | A₈ | A₁₀ | A₁₂ |
|---|---|---|---|---|---|---|
| 3 | 0.000 | -1.9660E-04 | -2.1936E-06 | 1.4422E-05 | 4.5298E-08 | 0.000 |
| 4 | 0.000 | 4.4540E-03 | 9.4317E-05 | -9.2959E-04 | -2.9898E-06 | 0.000 |
| 5 | 0.000 | -1.1897E-02 | 4.4846E-07 | 8.8073E-04 | -1.3297E-06 | 0.000 |
| 6 | 0.000 | -1.8362E-02 | -1.6496E-05 | 1.2263E-03 | -4.8609E-06 | 0.000 |
| 7 | 0.000 | 2.9031E-03 | 1.0528E-04 | -1.2329E-03 | -7.2704E-06 | 0.000 |
| 8 | 0.000 | 2.4947E-03 | 5.1464E-05 | -8.3939E-04 | -5.2730E-06 | 0.000 |
| 9 | 0.000 | 8.2838E-02 | 9.8618E-03 | -2.8300E-02 | -1.3476E-03 | 0.000 |
| 10 | 0.000 | 9.9528E-02 | 1.2593E-02 | -3.9687E-02 | -4.3699E-03 | 0.000 |
| 11 | 0.000 | -1.0630E-01 | -5.4734E-02 | 3.4586E-02 | 2.3471E-02 | 0.000 |
| 12 | 0.000 | -1.8261E-01 | -4.2624E-02 | 6.4343E-02 | 1.7993E-02 | 0.000 |
| 13 | 0.000 | -0.10399586 | -0.01420369 | 0.007722372 | 0.008177431 | 0.000 |
| 14 | 0.000 | -0.03795637 | 0.001148178 | -0.00260434 | -0.00016189 | 0.000 |
| 15 | 0.000 | 5.0335E-03 | -2.4881E-05 | 6.0727E-04 | -1.9859E-06 | 0.000 |
| 16 | 0.000 | -3.6813E-03 | 8.4378E-05 | 8.7888E-04 | -1.2349E-05 | 0.000 |
| 17 | 0.000 | -6.6123E-03 | 2.1697E-04 | -1.7951E-03 | -1.5795E-05 | 0.000 |
| 18 | 0.000 | -8.7149E-03 | 1.3767E-04 | -1.6175E-03 | -6.9961E-06 | 0.000 |
| 19 | 0.000 | -0.03060162 | 8.5596E-05 | 0.001452757 | -8.4883E-06 | 0.000 |
| 20 | 0.000 | -0.02559864 | -1.2644E-05 | 0.001754969 | -3.3904E-06 | 0.000 |

FIG. 5-5 shows spherical aberration, field curvature, and distortion for each wavelength according to the optical system of FIG. 5-1.

FIG. 5-6 shows a lateral aberration diagram according to the optical system of FIG. 5-1.

FIG. 5-7 shows spherical aberration, field curvature, and distortion for each wavelength according to the optical system in FIG. 5-2.

FIG. 5-8 shows a lateral aberration diagram according to the optical system of FIG. 5-2.

FIG. 5-9 shows spherical aberration, field curvature, and distortion for each wavelength according to the optical system of FIG. 5-3.

FIG. 5-10 shows a lateral aberration diagram according to the optical system of FIG. 5-3.

Thus, it can be seen from FIGs. 5-5 to 5-10 that each aberration is well corrected in the optical system according to this example.

FIG. 6 shows an electronic device 1000 according to one embodiment of the present disclosure. The electronic device 1000 has a camera 100 mounted with the optical system described above and a Graphics Processing Unit (GPU) 200. The camera 100 is configured to convert an image into digital image data via the optical system of the present disclosure and input the digital image data to the GPU 200. The GPU 200 is configured to process digital image data received from the camera 100.

In FIG. 6, the electronic device 1000 includes two cameras 100, but the number of cameras may be one or three or more. In the electronic device 1000, at least one camera may implement the optical system of the present disclosure.

## Claims

1. A variable optical system having a positive refractive power as a whole, comprising:
a first lens group (G1) having the positive refractive power and including at least four aspherical surfaces, the first lens group (G1) is movable along a direction of an optical axis direction in a moving range;
a second lens group (G2) including at least four aspherical surfaces; the second lens group (G2) is movable and is configured to be located on the optical axis or out of the optical path; and
a third lens group (G3),
wherein the variable optical system switches between a fist state and a second state, and wherein
in the first state, the first lens group (G1) moves from a position close to an image side to a position close to an object side to focus from infinity to a near object, the second lens group (G2) is out of an optical path and does not act on an image formation, and the third lens group (G3) is located on the optical axis and close to the first lens group (G1);
in the second state, the second lens group (G2) is located on the optical axis and inserted into a part of a space occurred by the first lens group (G1) moving to the object side in the first state, and acts on image formation as a part of the variable optical system; and
wherein the third lens group (G3) is movable, and in the second state, the third lens group (G3) is out of the optical path.

2. The variable optical system according to claim 1, further comprising:
a first reflective element (R1) closer to the object side than the first lens group (G1), configured to bend the optical axis by approximately 90 degrees in the optical path from the object side to the image side.

3. The variable optical system according to claim 1 or 2, wherein the second lens group (G2) is configured to move perpendicular to an optical axis and parallel to a longitudinal direction of an imaging element.

4. The variable optical system according to any one of claims 1 to 3, wherein TL 1 < TL 2; wherein
TL 1 indicates a distance from a nearest object surface of the first lens group (G1) to an image surface in the first state; and
TL2 indicates a distance from the nearest object surface of first lens group (G1) to the image surface in the second state.

5. The variable optical system according to any one of claims 1 to 4, the second lens group (G2) has negative refractive power.

6. The variable optical system according to any one of claims 1 to 5, wherein at least one of lenses constituting the first lens group (G1) has a non-circular shape with different effective length in a long side direction and a short side direction.

7. The variable optical system according to any one of claims 1 to 6, further comprising:
a second reflective element (R2) closer to the image side than the third lens group (G3), configured to bend an optical axis by approximately 90 degrees on the image side of the variable optical system.

8. The variable optical system according to any one of claims 1 to 7, wherein the following conditions (i) to (iii) are satisfied: $0.55 < FL 1 / EFL 1 < 0.9$ (i) $0.6 < EFL 1 / TTL < 1.0$ (ii) $0.2 < \left|MAG\right| < 1.0$ (iii) where FL 1 indicates a focal length of the first lens group (G1), EFL1 indicates a focal length of the variable optical system in the first state, TTL indicates a distance on an optical axis from a surface vertex of a first lens to an image plane when focusing on infinite of the variable optical system in the first state, and MAG indicates an optical magnification at a minimum object distance of the variable optical system.

9. The variable optical system according to any one of claims 1 to 8, wherein the following conditions (iv) and (v) are satisfied: $0.7 < \left|FL2/EFL1\right| < 2.3$ (iv) $0.4 < \left|FL3/EFL2\right| < 2.8$ (v) where FL2 indicates a focal length of the second lens group (G2), FL3 indicates a focal length of the third lens group (G3), and EFL2 indicates a focal length of the variable optical system in the second state.

10. The variable optical system according to any one of claims 1 to 9, wherein the following condition (vi) is satisfied: $0.9 < St / MgTTL < 2.0$ (vi) where St indicates a maximum amount of movement of the first lens group (G1) when focusing, and MgTTL indicates a total lens length of the second lens group (G2).

11. An electronic device (1000) comprising the variable optical system according to any one of claims 1 to 10.

## Patentansprüche

1. Variables optisches System, das insgesamt eine positive Brechkraft aufweist und umfasst:
eine erste Linsengruppe (G1), die die positive Brechkraft aufweist und mindestens vier asphärische Oberflächen einschließt, wobei die erste Linsengruppe (G1) entlang einer Richtung einer optischen Achsenrichtung in einem Bewegungsbereich bewegbar ist;
eine zweite Linsengruppe (G2), die mindestens vier asphärische Oberflächen einschließt; wobei die zweite Linsengruppe (G2) bewegbar und konfiguriert ist, um auf der optischen Achse oder außerhalb des optischen Pfads angeordnet zu sein; und
eine dritte Linsengruppe (G3),
wobei das variable optische System zwischen einem ersten Zustand und einem zweiten Zustand umschaltet, und wobei
sich die erste Linsengruppe (G1) in dem ersten Zustand von einer Position nahe einer Bildseite zu einer Position nahe einer Objektseite bewegt, um von unendlich auf ein nahes Objekt zu fokussieren, die zweite Linsengruppe (G2) sich außerhalb eines optischen Pfads befindet und nicht auf die Bildentstehung einwirkt, und die dritte Linsengruppe (G3) auf der optischen Achse und nahe der ersten Linsengruppe (G1) angeordnet ist;
die zweite Linsengruppe (G2) in dem zweiten Zustand auf der optischen Achse angeordnet ist und in einen Teil eines Raums eingefügt ist, der durch die Bewegung der ersten Linsengruppe (G1) zu der Objektseite in dem ersten Zustand entstanden ist, und als Teil des variablen optischen Systems auf die Bildentstehung einwirkt; und wobei die dritte Linsengruppe (G3) bewegbar ist, wobei die dritte Linsengruppe (G3) sich in dem zweiten Zustand außerhalb des optischen Pfads befindet.

2. Variables optisches System nach Anspruch 1, das ferner umfasst:
ein erstes reflektierendes Element (R1) näher an der Objektseite als die erste Linsengruppe (G1), das konfiguriert ist, um die optische Achse auf dem optischen Pfad von der Objektseite zu der Bildseite um etwa 90 Grad zu biegen.

3. Variables optisches System nach Anspruch 1 oder 2, wobei die zweite Linsengruppe (G2) konfiguriert ist, um sich senkrecht zu einer optischen Achse und parallel zu einer Längsrichtung eines Abbildungselements zu bewegen.

4. Variables optisches System nach einem der Ansprüche 1 bis 3, wobei TL 1 < TL 2; wobei
TL 1 einen Abstand von einer nächstgelegenen Objektoberfläche der ersten Linsengruppe (G1) zu einer Bildoberfläche in dem ersten Zustand angibt; und
TL 2 einen Abstand von der nächstgelegenen Objektoberfläche der ersten Linsengruppe (G1) zu der Bildoberfläche in dem zweiten Zustand angibt.

5. Variables optisches System nach einem der Ansprüche 1 bis 4, wobei die zweite Linsengruppe (G2) eine negative Brechkraft aufweist.

6. Variables optisches System nach einem der Ansprüche 1 bis 5, wobei mindestens eine der Linsen, die die erste Linsengruppe (G1) bilden, eine nicht kreisförmige Form mit unterschiedlicher effektiver Länge in einer Langseitenrichtung und einer Kurzseitenrichtung aufweist.

7. Variables optisches System nach einem der Ansprüche 1 bis 6, das ferner umfasst: ein zweites reflektierendes Element (R2) näher an der Bildseite als die dritte Linsengruppe (G3), das konfiguriert ist, um eine optische Achse auf der Bildseite des variablen optischen Systems um etwa 90 Grad zu biegen.

8. Variables optisches System nach einem der Ansprüche 1 bis 7, wobei die folgenden Bedingungen (i) bis (iii) erfüllt sind: $0 , 55 < FL 1 / EFL 1 < 0 , 9$ (i) $0 , 6 < EFL 1 / TTL < 1 , 0$ (ii) $0 , 2 < \left|MAG\right| < 1 , 0$ (iii) wobei FL1 eine Brennweite der ersten Linsengruppe (G1) angibt, EFL1 eine Brennweite des variablen optischen Systems in dem ersten Zustand angibt, TTL einen Abstand auf einer optischen Achse von einem Oberflächenscheitel einer ersten Linse zu einer Bildebene beim Fokussieren auf Unendlich des variablen optischen Systems in dem ersten Zustand angibt, und MAG eine optische Vergrößerung bei einem minimalen Objektabstand des variablen optischen Systems angibt.

9. Variables optisches System nach einem der Ansprüche 1 bis 8, wobei die folgenden Bedingungen (iv) und (v) erfüllt sind: $0 , 7 < \left|FL2/EFL1\right| < 2 , 3$ (iv) $0 , 4 < \left|FL3/EFL2\right| < 2 , 8$ (v) wobei FL2 eine Brennweite der zweiten Linsengruppe (G2) angibt, FL3 eine Brennweite der dritten Linsengruppe (G3) angibt und EFL2 eine Brennweite des variablen optischen Systems in dem zweiten Zustand angibt.

10. Variables optisches System nach einem der Ansprüche 1 bis 9, wobei die folgende Bedingung (vi) erfüllt ist: $0 , 9 < St / MgTTL < 2 , 0$ (vi) wobei St eine maximale Größe der Bewegung der ersten Linsengruppe (G1) beim Fokussieren angibt und MgTTL eine Gesamtlinsenlänge der zweiten Linsengruppe (G2) angibt.

11. Elektronische Vorrichtung (1000), die das variable optische System nach einem der Ansprüche 1 bis 10 umfasst.

## Revendications

1. Système optique variable ayant une réfringence positive dans son ensemble, comprenant :
un premier groupe de lentilles (G1) ayant la réfringence positive et comportant au moins quatre surfaces asphériques, le premier groupe de lentilles (G1) est déplaçable le long d'une direction d'une direction d'axe optique dans une plage de déplacement ;
un deuxième groupe de lentilles (G2) comportant au moins quatre surfaces asphériques ; le deuxième groupe de lentilles (G2) est déplaçable et est conçu pour être situé sur l'axe optique ou hors du trajet optique ; et
un troisième groupe de lentilles (G3),
dans lequel le système optique variable bascule entre un premier état et un second état, et dans lequel
dans le premier état, le premier groupe de lentilles (G1) se déplace d'une position proche d'un côté image vers une position proche d'un côté objet pour faire une mise au point de l'infini à un objet proche, le deuxième groupe de lentilles (G2) est hors d'un trajet optique et n'agit pas sur une formation d'image, et le troisième groupe de lentilles (G3) est situé sur l'axe optique et est proche du premier groupe de lentilles (G1) ;
dans le second état, le deuxième groupe de lentilles (G2) est situé sur l'axe optique et inséré dans une partie d'un espace produit par le premier groupe de lentilles (G1) se déplaçant vers le côté objet dans le premier état, et agit sur la formation d'image en tant que partie du système optique variable ; et
dans lequel le troisième groupe de lentilles (G3) est déplaçable, et dans le second état, le troisième groupe de lentilles (G3) est hors du trajet optique.

2. Système optique variable selon la revendication 1, comprenant en outre :
un premier élément réfléchissant (R1) plus proche du côté objet que le premier groupe de lentilles (G1), conçu pour courber l'axe optique d'approximativement 90 degrés dans le trajet optique du côté objet vers le côté image.

3. Système optique variable selon la revendication 1 ou 2, dans lequel le deuxième groupe de lentilles (G2) est conçu pour se déplacer perpendiculairement à un axe optique et parallèlement à une direction longitudinale d'un élément d'imagerie.

4. Système optique variable selon l'une quelconque des revendications 1 à 3, dans lequel TL 1 < TL 2 ; dans lequel
TL 1 indique une distance allant d'une surface d'objet la plus proche du premier groupe de lentilles (G1) à une surface d'image dans le premier état ; et
TL2 indique une distance allant de la surface d'objet la plus proche du premier groupe de lentilles (G1) à la surface d'image dans le second état.

5. Système optique variable selon l'une quelconque des revendications 1 à 4, le deuxième groupe de lentilles (G2) a une réfringence négative.

6. Système optique variable selon l'une quelconque des revendications 1 à 5, dans lequel au moins l'une des lentilles constituant le premier groupe de lentilles (G1) a une forme non circulaire avec une longueur effective différente dans une direction de côté long et une direction de côté court.

7. Système optique variable selon l'une quelconque des revendications 1 à 6, comprenant en outre :
un second élément réfléchissant (R2) plus proche du côté image que le troisième groupe de lentilles (G3), conçu pour courber un axe optique d'approximativement 90 degrés sur le côté image du système optique variable.

8. Système optique variable selon l'une quelconque des revendications 1 à 7, dans lequel les conditions (i) à (iii) suivantes sont remplies : $0 , 55 < FL 1 / EFL 1 < 0 , 9$ (i) $0 , 6 < EFL 1 / TTL < 1 , 0$ (ii) $0 , 2 < \left|MAG\right| < 1 , 0$ (iii) où FL1 indique une longueur focale du premier groupe de lentilles (G1), EFL1 indique une longueur focale du système optique variable dans le premier état, TTL indique une distance sur un axe optique allant d'un sommet de surface d'une première lentille à un plan d'image lors de la mise au point à l'infini du système optique variable dans le premier état, et MAG indique un grossissement optique à une distance d'objet minimale du système optique variable.

9. Système optique variable selon l'une quelconque des revendications 1 à 8, dans lequel les conditions (iv) et (v) suivantes sont remplies : $0 , 7 < \left|FL2/EFL1\right| < 2 , 3$ (iv) $0 , 4 < \left|FL3/EFL2\right| < 2 , 8$ (v) où FL2 indique une longueur focale du deuxième groupe de lentilles (G2), FL3 indique une longueur focale du troisième groupe de lentilles (G3), et EFL2 indique une longueur focale du système optique variable dans le second état.

10. Système optique variable selon l'une quelconque des revendications 1 à 9, dans lequel la condition (vi) suivante est remplie : $0 , 9 < St / MgTTL < 2 , 0$ (vi) où St indique une quantité maximale de déplacement du premier groupe de lentilles (G1) lors de la mise au point, et MgTTL indique une longueur totale de lentille du deuxième groupe de lentilles (G2).

11. Dispositif électronique (1000) comprenant le système optique variable selon l'une quelconque des revendications 1 à 10.
